# EUROPEAN PATENT APPLICATION

(11) **EP 3 572 964 A1**
(43) Date of publication of application: **27.11.2019**
(21) Application number: 18741714.2
(22) Date of filing: 04.01.2018
(51) Int. Cl.: G06F 21/62, G06F 21/31, G06F 21/60, G06F 21/64, H04M 11/04, G06F 21/44, H04L 29/06, H04W 28/18, H04W 4/70, H04W 12/10

(54) **INFORMATION PROCESSING DEVICE AND METHOD, AND PROGRAM**

(30) Priority: 17.01.2017 JP 2017006124
(71) Applicant: Sony Corporation, Tokyo 108-0075 (JP)
(72) Inventor: TAKANO Hiroaki, Tokyo 108-0075 (JP); SHIRAI Taizo, Tokyo 108-0075 (JP); KAWAMOTO Yohei, Tokyo 108-0075 (JP); TANAKA Yu, Tokyo 108-0075 (JP); SUGAYA Shigeru, Tokyo 108-0075 (JP)
(74) Representative: D Young & Co LLP
(86) International application number: PCT/JP2018/000041
(87) International publication number: WO 2018/135309

(57) **Abstract**

The present technology relates to an information processing device and method and a program capable of efficiently protecting sufficient security.

An information processing device includes a communication unit that transmits information regarding security of the information processing device and receives designation information indicating processing to be performed for security protection, transmitted in response to the transmission of the information regarding the security and a control unit that performs the processing for security protection on a basis of the designation information in a case where the control unit transmits data to a predetermined device or in a case where the control unit receives data transmitted from the device. The present technology is applicable to a healthcare IoT system.

## Description

### TECHNICAL FIELD

The present technology relates to an information processing device, method, and a program, and more particularly, to an information processing device, method, and a program capable of efficiently performing sufficient security protection.

### BACKGROUND ART

In recent years, technology has been proposed that provides various services to users, for example, by using a communication system such as Internet of Things (IoT) in which devices directly communicate with each other.

Furthermore, for example, as technology regarding a network, technology has been proposed that optimizes a communication traffic according to a communication condition of a device (for example, refer to Patent Document 1).

### CITATION LIST

### PATENT DOCUMENT

Patent Document 1: Published Japanese Translation of PCT International Application No. 2007-502584

### SUMMARY OF THE INVENTION

### PROBLEMS TO BE SOLVED BY THE INVENTION

By the way, at the time of providing the service using the communication system, data with high security importance such as data regarding a user and the like is exchanged via the network in many cases. Therefore, it is necessary to secure sufficient security between the devices in the network. However, since the security importance changes according to the data exchanged between the devices, and the like, technology that can efficiently perform sufficient security protection is desired.

The present technology has been made in view of such a situation and can efficiently perform sufficient security protection.

### SOLUTIONS TO PROBLEMS

An information processing device according to a first aspect of the present technology includes a communication unit that transmits information regarding security of the information processing device and receives designation information indicating processing to be performed for security protection, transmitted in response to the transmission of the information regarding the security and a control unit that performs the processing for security protection on the basis of the designation information in a case where the control unit transmits data to a predetermined device or in a case where the control unit receives data transmitted from the device.

The information regarding the security can include the information indicating the processing for security protection that is executable by the information processing device.

The processing for security protection can be ciphering, integrity check, or authentication.

The information regarding the security can include information indicating processing that is executable on data by the information processing device.

The processing executable on the data by the information processing device can be addition of personal identification information to data or conversion processing on data.

The information regarding the security can include information indicating a state of a segment between the information processing device and the device regarding security.

In a case of receiving a transmission request of the information regarding the security, it is possible to make the communication unit transmit the transmission request to the device and transmit information regarding security of the information processing device in response to the transmission request.

In a case where the device has not responded to the transmission request, it is possible to make the communication unit transmit information indicating that the device that does not have a reporting capability of the information regarding the security exists.

When the communication unit has received a connection rejection request for requesting for rejecting to be connected to the device that does not have the reporting capability, it is possible to make the control unit perform control so as not to exchange data with the device that does not have the reporting capability.

In a case where the device has not responded to the transmission request, and when the information regarding the security of the device has been specified by the exchange of the data with the device, it is possible to make the communication unit transmit the specified information regarding the security of the device.

The information regarding the security can include information regarding a traffic amount of data in the segment between the information processing device and the device.

In a case of receiving the designation information from a plurality of devices different from each other regarding the segment between the information processing device and the device, it is possible to make the control unit select one piece of the designation information from among the received plurality of pieces of designation information and perform the processing for security protection on the basis of the selected designation information.

It is possible to make the communication unit transmit information indicating a selection result of the designation information to the plurality of devices.

It is possible to make the communication unit further receive selection criteria information indicating a selection criteria of the designation information and to make the control unit select the designation information on the basis of the selection criteria information.

An information processing method of an information processing device or a program according to the first aspect of the present technology includes steps of transmitting information regarding security of the information processing device and receiving designation information indicating processing to be performed for security protection transmitted in response to the transmission of the information regarding the security and performing processing for security protection on the basis of the designation information in a case of transmitting data to a predetermined device or receiving data transmitted from the device.

According to the first aspect of the present technology, in a case where information regarding security of the information processing device is transmitted, designation information is received that indicates processing to be performed for security protection transmitted in response to the transmission of the information regarding the security, and data is transmitted to a predetermined device or data transmitted from the device is received, the processing for security protection is performed on the basis of the designation information.

An information processing device according to a second aspect of the present technology includes a communication unit that receives information regarding security of a predetermined device and transmits designation information indicating processing to be performed for security protection by the device and a control unit that generates the designation information on the basis of the information regarding the security.

The information regarding the security can include the information indicating the processing for security protection that is executable by the device.

The processing for security protection can be ciphering, integrity check, or authentication.

The information regarding the security can include information indicating processing that is executable on data by the device.

The processing executable on the data by the device can be addition of personal identification information to data or conversion processing on data.

The information regarding the security can include information indicating a state of a segment between the device and other device regarding security.

In a case where the communication unit has received information indicating that other device that does not have a reporting capability of the information regarding the security exists from the device, it is possible to make the control unit generate the designation information on the basis of the information regarding the security and the information indicating that the other device that does not have the reporting capability exists.

In a case where the information regarding the other device specified by the device is received by the communication unit after receiving the information indicating that the other device that does not have the reporting capability exists, it is possible to make the control unit generate the designation information of a device, different from the device, connected to the other device on the basis of the information regarding the security of the other device.

It is possible to make the communication unit transmit a connection rejection request for requesting for rejecting to be connected to the other device that does not have the reporting capability.

The information regarding the security can include information regarding a traffic amount of data in the segment between the device and the other device.

It is possible to make the communication unit transmit the designation information to the device configuring a local network and transmit information indicating a security management state in the local network to a device that performs security management of a network including the local network.

It is possible to make the control unit determine processing to be performed for security protection by the device on the basis of the information regarding the security for the segment between the device and the other device and generate the designation information on the basis of a determination result and a determination result by another information processing device different from the information processing device regarding the processing to be performed for security protection by the device.

It is possible to make the communication unit transmit selection criteria information indicating a selection criteria of the designation information to the device and receive information indicating a single piece of the designation information selected from among the plurality of pieces of designation information received from the plurality of devices including the information processing device by the device from the device for each segment between the device and the other device.

An information processing method or a program according to the second aspect of the present technology includes steps of receiving information regarding security of a predetermined device, generating designation information indicating processing to be performed for security protection by the device on the basis of the information regarding the security and transmitting the designation information.

In the second aspect of the present technology, the information regarding the security of a predetermined device is received, designation information indicating processing to be performed for security protection by the device is generated on the basis of the information regarding the security, and the designation information is transmitted.

### EFFECTS OF THE INVENTION

According to a first and second aspects of the present technology, it is possible to efficiently perform sufficient security protection.

Note that the effects described herein are not necessarily limited and that the effect may be any effects described in the present disclosure.

### BRIEF DESCRIPTION OF DRAWINGS

Fig. 1 is a diagram for explaining an outline of a healthcare IoT system.
Fig. 2 is a diagram for explaining a data path of healthcare IoT.
Fig. 3 is a diagram for explaining the data path of the healthcare IoT.
Fig. 4 is a diagram for explaining the data path of the healthcare IoT.
Fig. 5 is a diagram for explaining the data path of the healthcare IoT.
Fig. 6 is a diagram for explaining a data path viewed from a communication platform.
Fig. 7 is a diagram for explaining an example of data with high security importance.
Fig. 8 is a diagram for explaining an example of data with low security importance.
Fig. 9 is a diagram for explaining an example in which security importance changes.
Fig. 10 is a diagram for explaining security measures.
Fig. 11 is a diagram illustrating an exemplary configuration of the healthcare IoT system.
Fig. 12 is a diagram for explaining security management.
Fig. 13 is a diagram illustrating an example of a security capability report.
Fig. 14 is a diagram for explaining a security policy.
Fig. 15 is a diagram for explaining an application example of the security measure.
Fig. 16 is a diagram illustrating an exemplary configuration of an IoT device.
Fig. 17 is a diagram illustrating an exemplary configuration of a security management entity.
Fig. 18 is a flowchart for explaining distribution processing and reception processing.
Fig. 19 is a diagram for explaining a segment security report.
Fig. 20 is a flowchart for explaining the distribution processing and the reception processing.
Fig. 21 is a diagram for explaining the security management.
Fig. 22 is a diagram for explaining the security management.
Fig. 23 is a flowchart for explaining the distribution processing.
Fig. 24 is a flowchart for explaining the reception processing.
Fig. 25 is a flowchart for explaining the distribution processing.
Fig. 26 is a flowchart for explaining the reception processing.
Fig. 27 is a diagram for explaining the security management.
Fig. 28 is a flowchart for explaining the distribution processing and the reception processing.
Fig. 29 is a diagram illustrating an exemplary configuration of the healthcare IoT system.
Fig. 30 is a diagram for explaining the security management.
Fig. 31 is a diagram illustrating an exemplary configuration of a local security management entity.
Fig. 32 is a flowchart for explaining local security policy distribution processing, reception processing, and security policy distribution processing.
Fig. 33 is a diagram illustrating an exemplary configuration of the healthcare IoT system.
Fig. 34 is a diagram for explaining the security management.
Fig. 35 is a flowchart for explaining the distribution processing.
Fig. 36 is a flowchart for explaining the reception processing.
Fig. 37 is a diagram for explaining the security management.
Fig. 38 is a flowchart for explaining the distribution processing.
Fig. 39 is a flowchart for explaining the reception processing.
Fig. 40 is a diagram illustrating an exemplary configuration of a computer.

### MODE FOR CARRYING OUT THE INVENTION

Hereinafter, embodiments to which the present technology has been applied will be described with reference to the drawings.

### <First Embodiment>

### <About IoT>

Before describing a specific embodiment of the present technology, IoT will be described first.

The IoT is the Internet of things, unlike communication via human hands, the IoT is a communication system in which things directly communicate with each other. For example, Machine Type Communication (MTC) and Machine to Machine (M2M) are words expressing a communication topology for realizing the IoT, and these words indicate communication modes in which machines communicate with each other.

One feature of the IoT is that the number of devices that communicate is large. When it is assumed that there are about 10 times to 100 times of opportunities for relating to a single person, regarding a machine (device) that performs communication, communication devices as many as 10 times to 100 times of telephones used for human-to-human communication, or the like, are placed everywhere.

Communication includes wireless communication and wired communication. However, the wireless communication is suitable for the IoT. This is because the wireless communication has less restriction in a place where the device is arranged.

### <About Healthcare IoT>

Healthcare IoT has following features. In other words, the healthcare IoT has variety of players, variety of data paths, and variety of types of data.

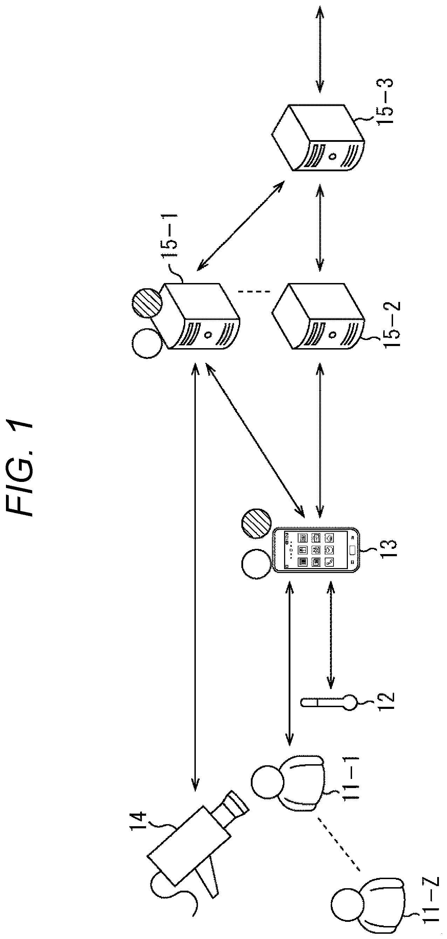

Here, Fig. 1 illustrates an outline of a healthcare IoT system.

In the example illustrated in Fig. 1, the healthcare IoT system includes clients 11-1 to 11-Z that are users of the healthcare IoT system, a measurement sensor 12, a smartphone 13, an environment sensor 14, and servers 15-1 to 15-3.

Note that, in the following description, in a case where it is not necessary to particularly distinguish the clients 11-1 to 11-Z from each other, the clients are simply referred to as a client 11. Furthermore, in the following description, in a case where it is not particularly necessary to distinguish the servers 15-1 to 15-3 from each other, the servers are simply referred to as a server 15.

In the healthcare IoT system, the measurement sensor 12 to the server 15 are connected via a network.

The measurement sensor 12 includes, for example, a sensor such as a thermometer for measuring a body temperature of the client 11-1 and the like, and the smartphone 13 is a terminal device held by the client 11. Furthermore, the environment sensor 14 includes, for example, a camera for imaging an environment around the client 11, and the like. In addition, the server 15 is, for example, a server managed by a business operator or the like that provides various services, and the like.

Note that, in Fig. 1, a device on which a hatched circle is drawn indicates that the device is an ID providing point where a personal ID regarding the user and the like is provided to data. In this example, the smartphone 13 and the server 15-1 are the ID providing points. Furthermore, a device on which a circle which is not hatched is drawn indicates that the device is a conversion point where raw data is converted into an analyzed point and the like. In this example, the smartphone 13 and the server 15-1 are the conversion points.

### (1) Variety of Players

One of features of the healthcare IoT is variety of players.

As the player of the healthcare IoT, for example, a large number of clients, a measurement sensor, an environment sensor, a primary business operator, and a secondary business operator, and in addition, a service provider, a device vendor, and a communication service operator exist. Therefore, the healthcare IoT has a feature that a great number of players exists in Focus Area.

The players of the healthcare IoT will be indicated below.

### (Client)

In the healthcare IoT system, the client is a data collection target. Furthermore, the client is a user of healthcare analysis data. The client is the most important player. It is not too much to say that security is protected for the client.

### (Sensor)

A sensor device for measuring a state of the client such as a thermometer will be arranged near the client. Moreover, some environment sensors (for example, monitor by camera) may be located at a position separated from the client in the vicinity of the client. Device vendors for providing these sensors will vary.

### (Smartphone)

Although there is a case where the sensor is built in the smartphone, there will be a case where the sensor is arranged outside the smartphone. The smartphone will have a role of a gateway of the various sensors.

### (Mobile Network Operator)

A service of a Mobile Network Operator (MNO) will be required for uploading and downloading data. In the present day, the Long Term Evolution (LTE) network has been widely used as a cellular network. The healthcare IoT system is insufficient with a single MNO network, and will be constructed by using various MNO networks.

### (Server)

On the side of the network, a server for collecting data is provided, and the servers will include a primary business operator that receives data from the client first and a secondary business operator to which the data is transferred from the primary business operator. These healthcare business operators will include various business operators such as a business operator that manages data and a business operator that provides a service. Moreover, it is expected that the business operators are dispersedly arranged across the world.

Furthermore, a different business operators will have different reliability with respect to the security. In addition, regarding the device, these devices provided from different vendors will not be able to protect personal information of the client if the security is guaranteed as a system. In a service provided by using systems and devices managed by a single business operator, the security can be easily protected. However, the healthcare IoT system is a system in which various business operators, the devices provided by the various device vendors, and various applications are concurrently moved, and a load on the security protection will increase.

### (2) Variety of data paths

One of the other features of the healthcare IoT is variety of data paths. In other words, in the healthcare IoT system, there are various signal directions, destinations, and transit points.

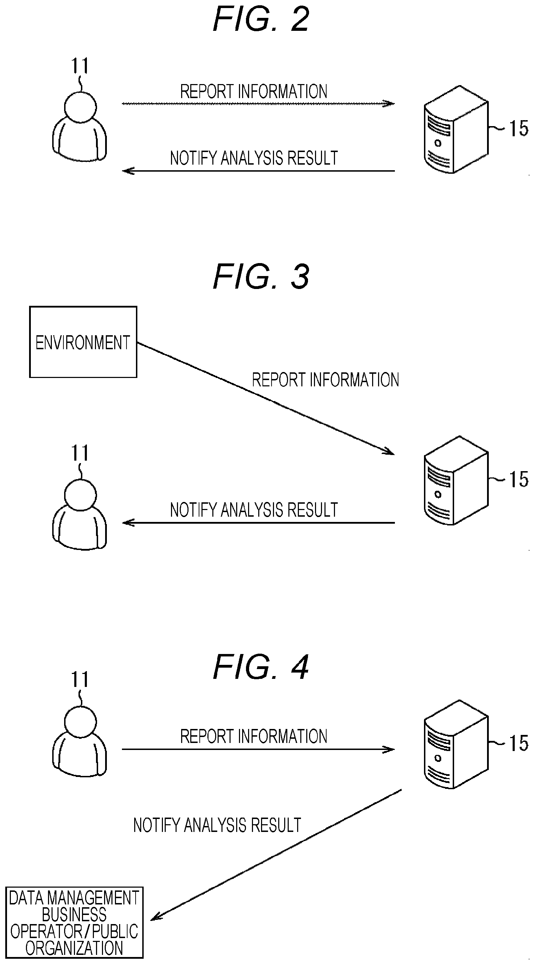

Here, with reference to Figs. 2 to 5, an example of the data path at an application level will be described. Note that, in Figs. 2 to 5, a part corresponding to that in Fig. 1 is denoted with the same reference numeral, and description thereof will be appropriately omitted.

First, for example, as illustrated in Fig. 2, a basic data path is configured in which the client 11 transmits own measurement data to the server 15 and the server 15 feeds back an analysis result based on the measurement data to the client 11.

Furthermore, for example, Fig. 3 illustrates a model in which the sensor for measuring environment such as a camera and a recorder around the client 11 collects information related to the client 11 such as a state of the client 11, a noise state around the client 11, and the like and reports the collected information to the server 15.

There will be a case where environmental information related to the client 11 is reported together with the personal ID for specifying the client 11. Furthermore, there will be a case where the environmental information is transmitted together with a personal ID used to be associated with the client 11 later. In addition, there will be a case where the personal ID is not finally associated with the client 11.

Fig. 4 illustrates a model in which the server 15 analyzes information from the plurality of clients 11 and reports the report to public organizations and the like without returning the report to the client 11. This model includes a case where body temperatures of multiple clients 11 are collected to adjust air conditioning of a department store.

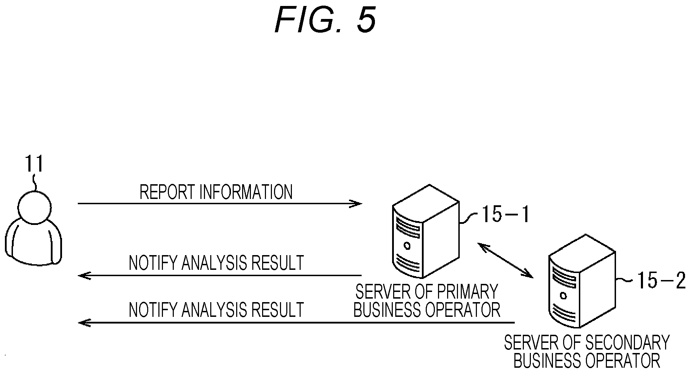

Fig. 5 illustrates a model in which client data stored in the server 15-1 is lent to another business operator. In this example, the client data supplied to the server 15-1 is provided from the server 15-1 to the server 15-2.

There will be a case where a certain business operator collects data from the plurality of business operators and analyzes and publishes the data. A situation in which data is successively lent to different business operators causes danger such that the data is transferred alone, and is not desirable from the viewpoint of security. This is because it is not easy to retrieve the data.

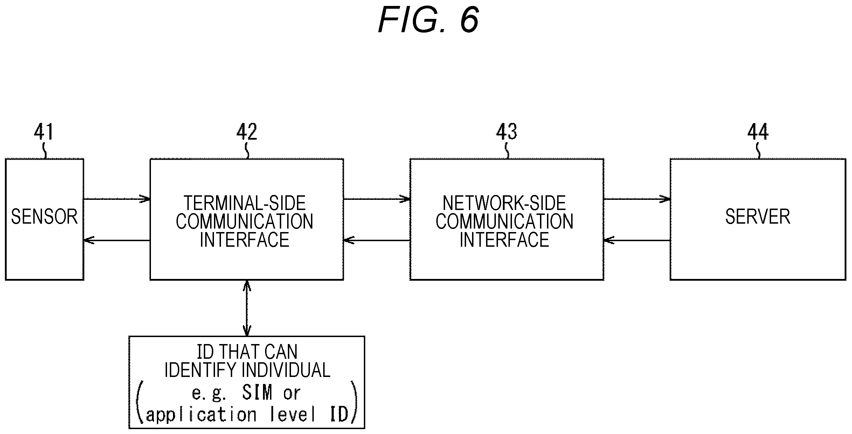

Fig. 6 illustrates a data path viewed from a communication platform.

This example includes a path in which the data is supplied from a sensor 41 to a server 44 via a terminal-side communication interface 42 and a network-side communication interface 43. Furthermore, there is a path in which the data is supplied from the server 44 to the sensor 41 via the network-side communication interface 43 and the terminal-side communication interface 42.

In this case, for example, the terminal-side communication interface 42 may provide an ID that can identify an individual, such as a Subscriber Identity Module (SIM) ID and an application level ID, to the data.

It is considered that the plurality of data paths has different security importance and a different role required in each path. Even when the security importance of the information transmitted from the sensor 41 is low, if the information is data associated with the personal ID, the security importance will be increased. In a case where information is created as statistical information after the server 44 has collected the personal information, personal information is diluted in the statistical information. Therefore, it is considered that the security importance is lowered in that case.

### (3) Variety of Types of Data

In addition, one of the other features of the healthcare IoT is variety of types of data.

In the healthcare IoT, various data exists such as raw data which is unprocessed data, analyzed data, and data to which the personal ID of the client is provided.

Since the healthcare IoT includes a wide range of applications, types of data to be protected varies. Some data has high security importance, and some data has low security importance.

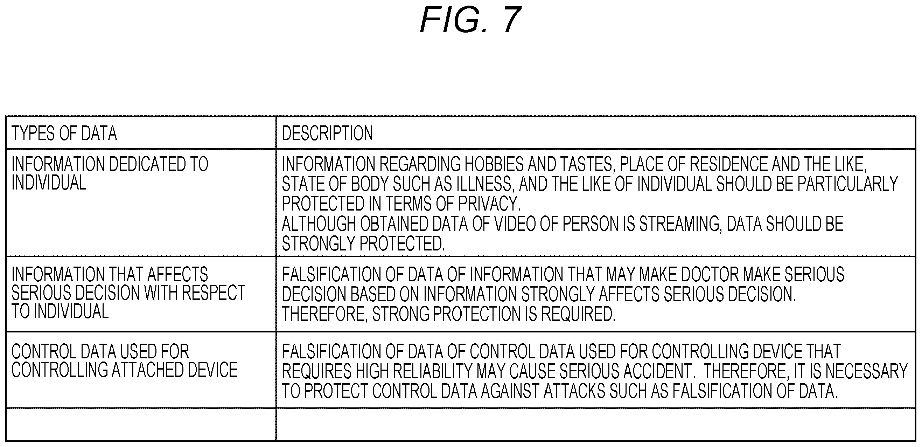

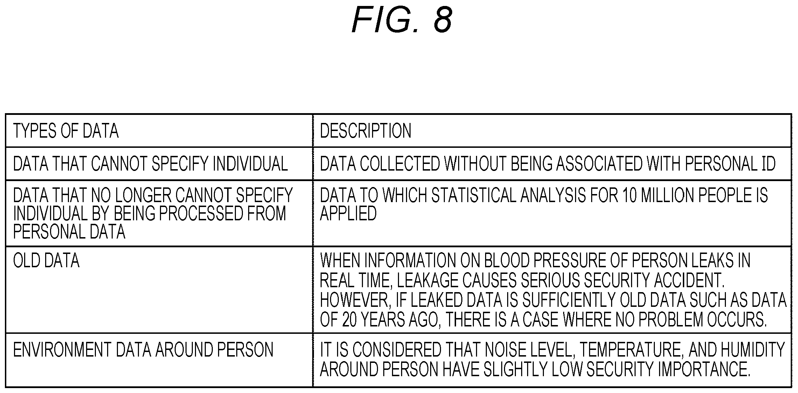

Here, with reference to Figs. 7 to 9, the security importance of the data will be described. In other words, Fig. 7 illustrates an example of the data with high security importance, and Fig. 8 illustrates an example of the data with low security importance.

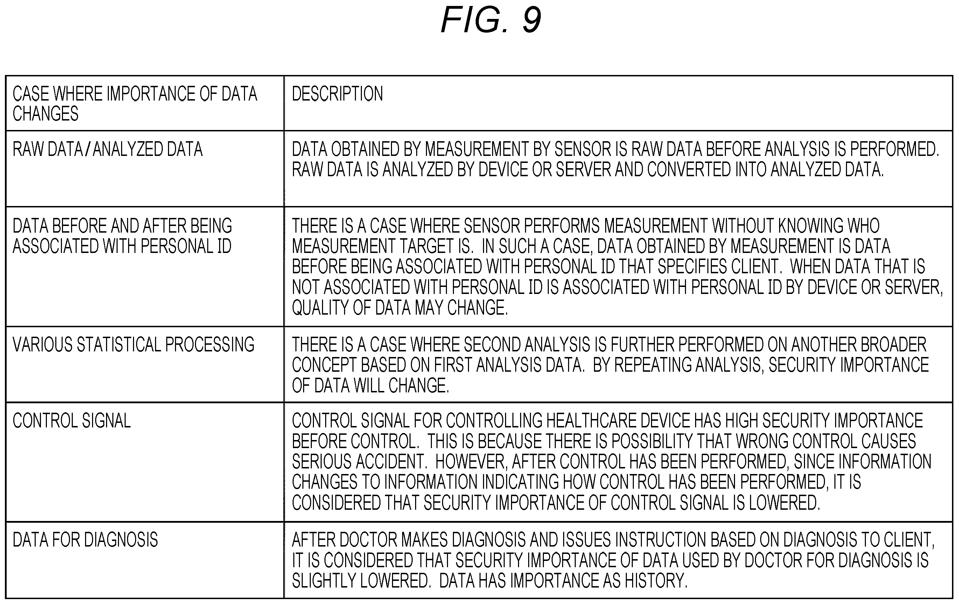

Furthermore, there is a case where the importance of the data changes, and Fig. 9 illustrates a case where the security importance changes. In other words, in Fig. 9, a case is illustrated where the security importance of the data changes before and after processing by a device or a server.

First, Fig. 7 illustrates an example of the data with high security importance.

In other words, in Fig. 7, as an example of the data (information) with high security importance, information dedicated to an individual, information that affects serious decision with respect to the individual, and control data used for controlling an attached device are illustrated.

The information dedicated to an individual regarding hobbies and tastes of a person, a place of a residence of a person and the like, a state of the body such as illness, and the like should be protected in terms of privacy. For example, although obtained data of a video of a person is streaming, the data should be strongly protected.

Furthermore, the information that affects serious decision with respect to the individual, that is, falsification of the data of information that may make a doctor or the like make serious decision on the basis of the information strongly affects the serious decision. Therefore, the strong protection is required for such information.

Moreover, the control data used for controlling the attached device, in other words, for example, falsification of control data used for controlling a device that requires high reliability may cause a serious accident. Therefore, it is necessary to protect the control data against attacks such as the falsification of the data.

Next, Fig. 8 illustrates an example of the data with low security importance.

For example, it is considered that the data that cannot specify the individual such as the data collected without being associated with the personal ID and the like and data that no longer cannot specify the individual by being processed from the personal data such as data to which statistical analysis for 10 million people is applied have low security importance.

Furthermore, when information on a blood pressure of a person leaks in real time, the leakage causes a serious security accident. However, if the leaked data is sufficiently old data such as data of 20 years ago, there is a case where no problem occurs. In addition, it is considered that, for example, security importance of environment data around a person such as a noise level around the person, a temperature, a humidity, and the like is slightly low.

Moreover, Fig. 9 illustrates a case where the importance of data changes.

Here, for example, raw data, analyzed data, and data before and after being associated with the personal ID are illustrated as examples.

In other words, for example, data obtained by measurement by the sensor is the raw data before the analysis is performed. The raw data is analyzed by a predetermined device or server and converted into the analyzed data. However, the raw data and the analyzed data have different security importance.

Similarly, there is a case where the sensor performs measurement without knowing what a measurement target is. In such a case, the data obtained by the measurement is data before being associated with the personal ID that specifies the client. Thereafter, when the data that is not associated with the personal ID is associated with the personal ID by the predetermined device or server, quality of the data, that is, the security importance may change.

Furthermore, in various statistical processing, security importance of data changes. For example, regarding analysis, there is a case where second analysis is performed on another broader concept on the basis of the first analysis data. In such a case, by repeating the analysis, the security importance of the data changes.

Moreover, a control signal for controlling a healthcare device has high security importance before the control. This is because there is a possibility that wrong control causes a serious accident. However, after the control has been performed, since the information changes to information indicating how the control has been performed, it is considered that the security importance of the control signal is lowered.

After the doctor makes a diagnosis and issues an instruction based on the diagnosis to the client, it is considered that the security importance of the data used by the doctor for diagnosis is slightly lowered. However, the data has importance as history.

### <Security Importance Realized at Low Cost>

The number of IoT devices is extremely large. Therefore, it is considered to be extremely difficult to appropriately store and transfer encryption keys for such an enormous number of IoT devices to enhance security tolerance.

For example, a method for delivering a key through mail is an unrealistic method for the enormous number of IoT devices. It is required to make the IoT device at low cost. Moreover, in the healthcare IoT, there are some use cases where high communication frequency is required. Therefore, there is a case where it is difficult to strongly protect all the data.

For the healthcare IoT, a security system realized at low cost, that is, low device cost, low calculation cost, low transaction cost, and low operation cost will be required.

### <Security Required for Healthcare IoT>

For example, when considering a technical scope of security technology, the following directionalities are considered.

### Directionality (1)

Strong security technology to strictly protect data is proposed.

### Directionality (2)

Efficient security technology is proposed that reduces labor for securing the security as recognizing the features of the healthcare IoT that there is various types of data and the type of the data changes.

### Directionality (3)

Efficient security technology is proposed that recognizes the features of the healthcare IoT in which data diffuses against user's intention.

Here, at least the directionality (1), that is, directionality for proposing the strong security technology is considered undesirable. Then, it is considered important to create technology with the directionality (2) and the directionality (3).

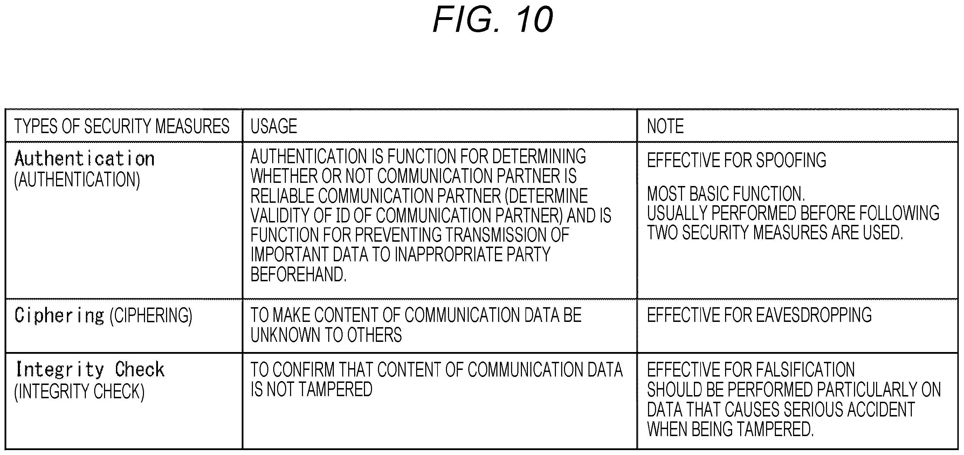

Furthermore, it is important to think about the following three points when thinking about the security. In other words, a security measure illustrated in Fig. 10 is used as a method (processing) for enhancing the security tolerance.

In Fig. 10, as a security measure for enhancing the security tolerance, that is, as processing for security protection, Authentication, Ciphering, and Integrity Check (data integrity check) are illustrated.

The authentication, that is, authentication processing is a function for determining whether or not a communication partner is a reliable communication partner, and for example, the authentication is performed by determining validity of an ID of the communication partner.

Such authentication is referred to as access security and is a function for preventing transmission of important data to an inappropriate party beforehand.

The authentication is particularly effective for spoofing, and this authentication function is the most basic security measure. The authentication is usually performed before the following two security measures are used.

The ciphering, that is, a ciphering function by encryption and decryption makes a content of communication data be unknown to others, and is particularly effective for eavesdropping.

The integrity check is a function for confirming that the content of the communication data is not tampered, and is effective for falsification. The integrity check should be performed particularly on data that causes a serious accident when being tampered.

The three security measures including the authentication, the ciphering, and the integrity check described above need keys. Although these security measures may use the same key, it is desirable to prepare different keys. For example, there is a case where a key for two security measures is generated from the key for the authentication.

Furthermore, to use the security measures, communication cost and device calculation cost are required. Therefore, it is important to change the security measure to be omitted and the security measure to be performed from among the authentication, the ciphering, and the integrity check for each communication path in the system.

### <Exemplary Configuration of Healthcare IoT System>

By the way, if it is possible to create an unified single healthcare IoT in the world, the conversion point where data is converted into other data, for example, is defined, and a place of the conversion point can be clearly recognized. For example, that is a case where a technical standard, such that when the data passes through the smartphone, a personal ID is provided to the data, is defined.

However, in the healthcare IoT system, various players exist, and the system is built by using various devices. Therefore, the healthcare IoT system provided by the business operator is different for each business operator. Furthermore, even in a system provided by a single business operator, a place where the personal ID is provided and a place where the raw data is converted into the analyzed data vary for each application.

Therefore, if the business operator intends to optimize the security before and after the conversion point, it has not been easy to recognize a state of the conversion point. Therefore, it is required to provide efficient security measures before and after the conversion point while securing flexibility of the system.

Therefore, in the present technology, a security management entity that determines the security measure between the IoT devices and performs security management is provided, and a security management system that can be flexibly adapted to a network configuration can be realized.

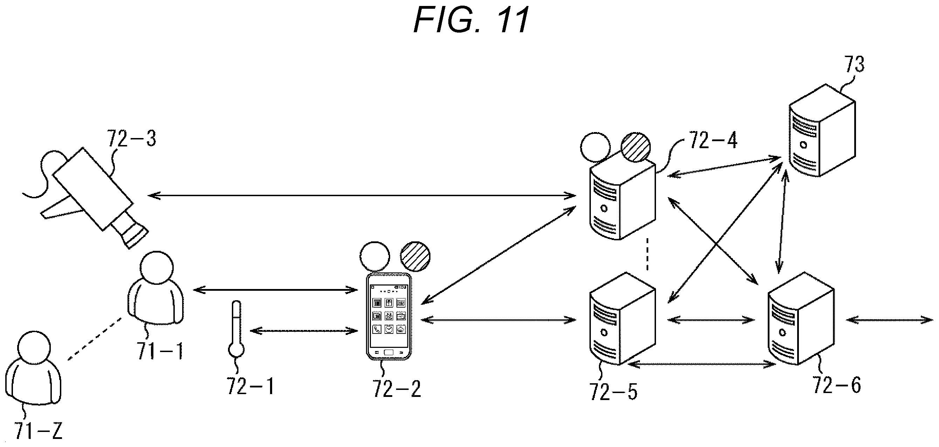

Fig. 11 is a diagram illustrating an exemplary configuration of an embodiment of the healthcare IoT system to which the present technology has been applied.

In the example illustrated in Fig. 11, the healthcare IoT system includes clients 71-1 to 71-Z that are users of the healthcare IoT system, IoT devices 72-1 to 72-6, and a security management entity 73.

Note that, here, to simplify the description, the IoT device only for the client 71-1 is illustrated. Hereinafter, in a case where it is not particularly necessary to distinguish the clients 71-1 to 71-Z from each other, the clients 71-1 to 71-Z are simply referred to as a client 71.

The IoT devices 72-1 to 72-6 are information processing devices for providing a predetermined service to the client 71.

The IoT device 72-1 includes, for example, a sensor such as a thermometer for measuring a body temperature of the client 71, and the like, directly measures information (data) regarding the client 71 such as the body temperature from the client 71, and supplies raw data, that is not processed, obtained by the measurement to the IoT device 72-2.

The IoT device 72-2 includes, for example, a smartphone. Note that the IoT device 72-2 is not limited to the smartphone and may be a terminal device owned by the client 71 such as a tablet terminal device and a personal computer.

For example, the IoT device 72-2 provides (add) a personal ID for identifying the client 71 to the raw data supplied from the IoT device 72-1 and, for example, analyzes the raw data supplied from the IoT device 72-1 to convert the raw data into other data such as the analyzed data. Moreover, the IoT device 72-2 transmits the raw data supplied from the IoT device 72-1, data obtained by, for example, converting the raw data, and the like to the IoT devices 72-4 and 72-5 and receives and displays data regarding services provided from the IoT devices 72-4 and 72-5.

The IoT device 72-3 includes, for example, an environment sensor such as a camera for imaging an environment around the client 71 and transmits the raw data obtained by imaging the client 71 and the like to the IoT device 72-4.

The IoT devices 72-4 and 72-5 are configured of, for example, servers managed by a primary business operator for providing services and the like. For example, the IoT device 72-4, for example, analyzes the data supplied from the IoT devices 72-2 and 72-3 to convert the data into other data such as the analyzed data and provides the personal ID of the client 71 to the data obtained by the conversion. Furthermore, for example, the IoT devices 72-4 and 72-5 transmit the data regarding the client 71 to the IoT device 72-6.

For example, the IoT device 72-6 includes a server managed by a secondary business operator for providing services and the like, processes the data received from the IoT devices 72-4 and 72-5, and transmits the data obtained by processing the above data to the IoT devices 72-4 and 72-5.

Note that, hereinafter, in a case where it is not particularly necessary to distinguish the IoT devices 72-1 to 72-6 from each other, the IoT devices 72-1 to 72-6 are simply referred to as an IoT device 72.

Note that, in Fig. 11, the IoT device 72 on which a hatched circle is drawn indicates that the IoT device 72 is an ID providing point where an ID such as a personal ID is provided to data. In this example, the IoT devices 72-2 and 72-4 are the ID providing points.

Furthermore, the IoT device 72 on which a hatched circle is not drawn indicates that the IoT device 72 is a conversion point where data conversion (processing) for, for example, converting the raw data into the other analyzed data and the like is performed. In this example, the IoT devices 72-2 and 72-4 are the conversion points.

The ID providing point and the conversion point are points at which security importance of data input to the IoT device 72 is different from security importance of data output from the IoT device 72, that is, a point (position) at which the security importance of the data changes.

The security management entity 73 is an information processing device for managing the security in the healthcare IoT system. The security management entity 73 determines a security policy indicating how to secure the security when data is exchanged between the IoT devices 72, that is, which security measure is applied and distributes a security policy configuration indicating the security policy to each IoT device 72.

### <About Security Management>

Here, security management by the security management entity 73 will be described.

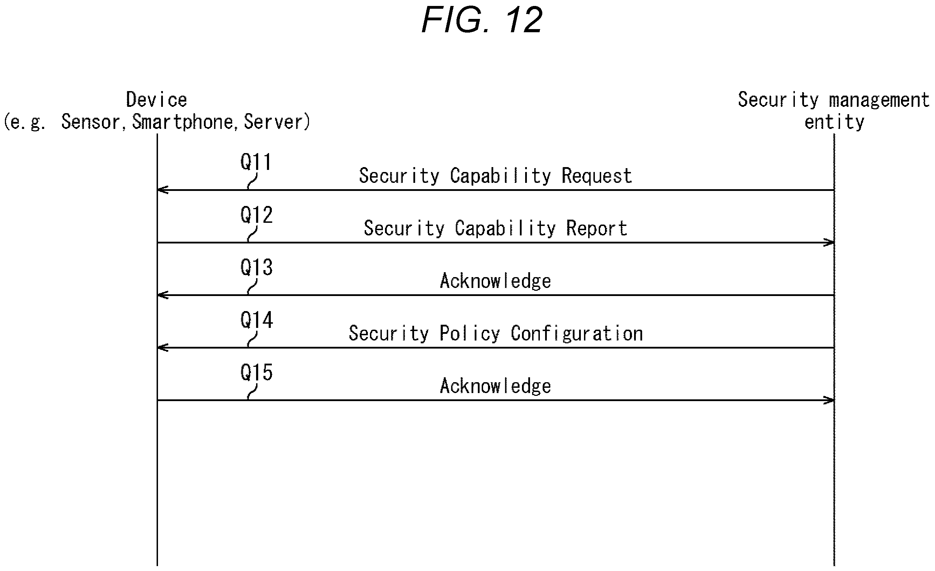

For example, as illustrated in Fig. 12, the security management entity 73 collects a security capability report indicating a security capability that is a capability of the IoT device 72 related to the security from each IoT device 72 directly from the IoT device 72 or via other IoT device 72. The security capability report is information regarding the security of the IoT device 72.

Specifically, for example, as indicated by an arrow Q11, the security management entity 73 transmits a security capability request that is a transmission request for requesting transmission of the security capability report to the IoT device 72, and the IoT device 72 receives the security capability request.

Then, as indicated by an arrow Q12, the IoT device 72 transmits a security capability report indicating the security capability of the IoT device 72 to the security management entity 73 in response to the security capability request.

When receiving the security capability report transmitted from the IoT device 72, the security management entity 73 transmits Acknowledge indicating the reception of the security capability report to the IoT device 72 as indicated by an arrow Q13.

Here, the security capability is a capability regarding the security, for example, a capability for converting the raw data into the analyzed data, that is, data conversion capability, a capability for providing (add) a personal ID to the data, a capability for performing processing for security protection (securing) such as authentication, and the like.

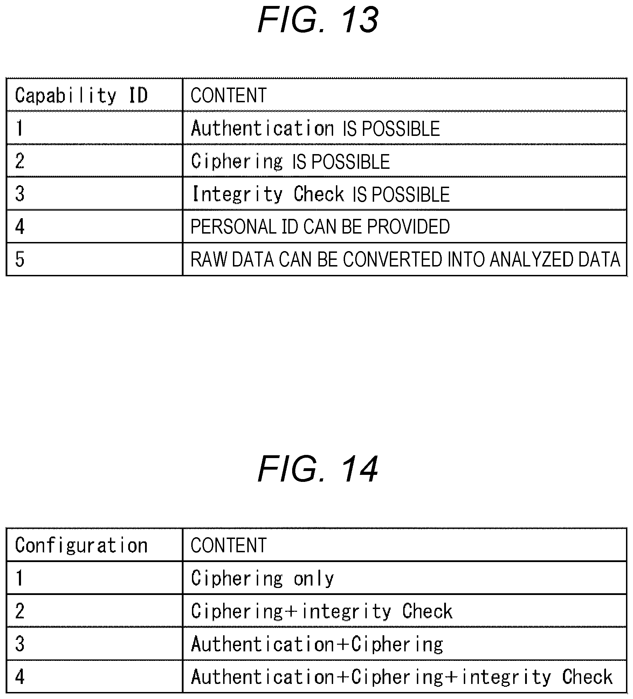

For example, as illustrated in Fig. 13, the IoT device 72 reports the security capability of the IoT device 72 to the security management entity 73 by transmitting a security capability report including a Capability ID indicating the security capability.

In the example illustrated in Fig. 13, the security capability report includes Capability IDs "1" to "5", and it is found the IoT device 72 has a security capability indicated by these Capability IDs.

Here, the Capability ID "1" indicates a capability for performing the authentication (authentication processing), the Capability ID "2" indicates a capability for performing the ciphering, and the Capability ID "3" indicates a capability for performing the integrity check.

The capabilities indicated by the Capability IDs "1" to "3" indicate processing that can be performed by the IoT device 72 for protecting the security, that is, for securing the security. In other words, the capabilities indicated by the Capability IDs "1" to "3" indicate the security measures that can be performed for securing the security.

Furthermore, the Capability ID "4" indicates a capability for providing (add) the personal ID, that is, personal identification information for identifying the client 71, and the Capability ID "5" indicates a capability for converting the raw data into the analyzed data, that is, for performing data conversion processing.

The capabilities indicated by the Capability IDs "4" and "5" indicate a capability for performing processing on the data regarding the client 71 handled in the healthcare IoT system, and particularly, processing in which the security importance of the data changes before and after the processing. In other words, the Capability IDs "4" and "5" are information indicating processing that can be performed by the IoT device 72 on data exchanged between the IoT devices 72.

Therefore, it is found that the IoT device 72 having the capability indicated by the Capability ID "4" is set to the ID providing point, and it is found that the IoT device 72 having the capability indicated by the Capability ID "5" is set to the conversion point.

In this way, by using the security capability report, not only the security measure of the IoT device 72 but also the capability for performing the processing related to the change in the security importance are reported. This is because the application of the personal ID and the conversion into the analyzed data are information that greatly affects determination of the security policy.

Returning to the description of Fig. 12, the security management entity 73 recognizes the security capability of each IoT device 72 by collecting the security capability report from each IoT device 72 and recognizes a connection relationship between the IoT devices 72, that is, a network topology of the healthcare IoT system.

Then, the security management entity 73 determines the security policy on the basis of the recognized security capability of each IoT device 72 and network topology.

Here, the security policy indicates how to secure the security, that is, what type of security measure is applied to data to be exchanged in order to protect the security when the data is exchanged between the IoT devices 72.

In the healthcare IoT system, regarding each IoT device 72, a security measure to be applied is determined for each of other IoT devices 72 to be communication partners, that is, each segment that is the communication path between the IoT device 72 and the other IoT device 72.

When determining the security measure to be applied, that is, the security policy, for each segment of each IoT device 72 in this way, the security management entity 73 transmits a security policy configuration indicating the determination result to the IoT device 72 as indicated by an arrow Q14.

The security policy configuration is information indicating processing to be performed for security protection in a case where a predetermined IoT device 72 transmits data to the other IoT device 72 or in a case where the predetermined IoT device 72 receives data transmitted from the other IoT device 72. In other words, the security policy configuration is designation information designating the processing for security protection to be performed by the IoT device 72 when the IoT device 72 exchanges data with the other IoT device 72.

Furthermore, when receiving the security policy configuration from the security management entity 73, as indicated by an arrow Q15, the IoT device 72 transmits Acknowledgment indicating the reception of the security policy configuration to the security management entity 73.

The security policy configuration includes a Configuration ID indicating the security policy as illustrated in Fig. 14, for example.

In this example, the Configuration ID "1" indicates that only ciphering is performed for security protection, and the Configuration ID "2" indicates that the ciphering and the integrity check are performed for security protection. Furthermore, the Configuration ID "3" indicates that the authentication and the ciphering are performed for security protection, and the Configuration ID "4" indicates that the authentication, the ciphering, and the integrity check are performed for security protection.

As an example of the determination (selection) of the security policy, for example, regarding the IoT device 72 that does not have the capability indicated by the Capability ID "5", in a segment in which the IoT device 72 transmits data and a segment in which the IoT device 72 receives data, the security protection according to the security policy indicated by the Configuration ID "1" is performed.

Furthermore, for example, regarding the IoT device 72 that does not have the capability indicated by the Capability ID "1", the security policy indicated by the Configuration ID "1" or "2" is selected for the segment related to the IoT device 72.

Moreover, for example, regarding the IoT device 72 having the capability indicated by the Capability ID "4", the security policy indicated by the Configuration ID "4" is selected for the segment in which the IoT device 72 transmits data, and the security policy indicated by the Configuration ID "1" is selected for the segment in which the IoT device 72 receives data.

It is sufficient if the security policy be appropriately determined for each healthcare IoT system, and any determining method may be used.

When the security policy configuration is distributed to each IoT device 72 as described above, each IoT device 72 exchanges data with the other IoT device 72 according to the security policy indicated by the security policy configuration.

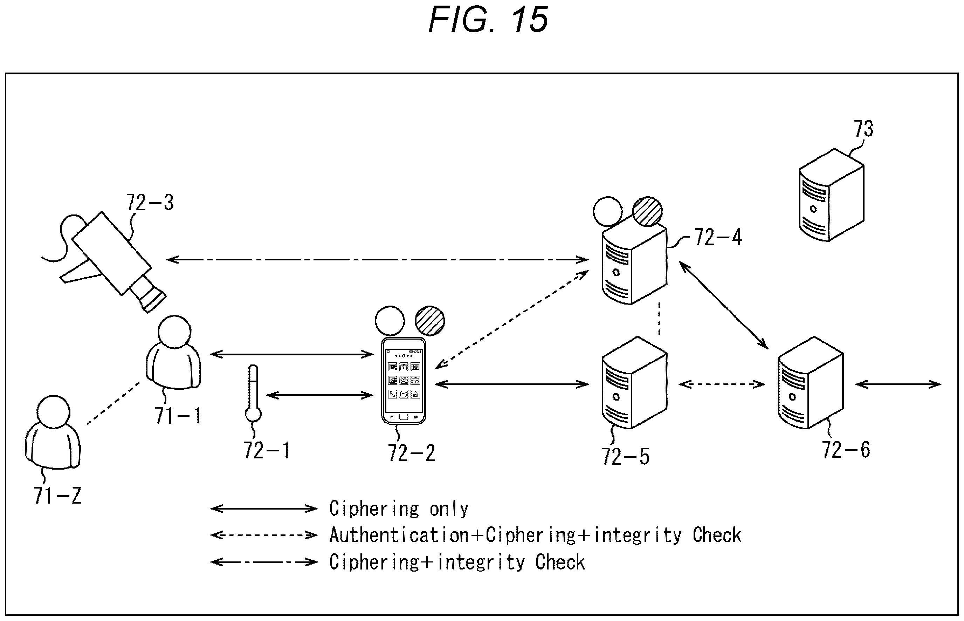

As a result, for example, the security measure is applied as illustrated in Fig. 15. Note that a part in Fig. 15 corresponding to that in a case in Fig. 11 is denoted with the same reference numeral, and description thereof will be appropriately omitted.

In the example illustrated in Fig. 15, an arrow connecting between the IoT devices 72 indicates a communication path, that is, a segment.

In particular, a segment drawn by a solid line indicates that the ciphering is performed as the security measure between the IoT devices 72 at both ends of the segment. Furthermore, a segment drawn by a dotted line indicates that the authentication, the ciphering, and the integrity check are performed as the security measures between the IoT devices 72 at both ends of the segment. Moreover, a segment drawn by an alternate long and short dash line indicates that the ciphering and the integrity check are performed as the security measures between the IoT devices 72 at both ends of the segment.

Therefore, for example, when the IoT devices 72-2 and 72-5 exchange data, the ciphering processing is performed on the data as the processing for security protection. In other words, the encrypted data is exchanged between the IoT devices 72-2 and 72-5.

Furthermore, for example, when the IoT devices 72-2 and 72-4 exchange data, the authentication, the ciphering, and the integrity check are performed as the processing for security protection.

Note that, here, an example is described in which the security management entity 73 and the IoT device 72 are different information processing devices. However, the IoT device 72 may function as not only the IoT device but also the security management entity 73.

### <Exemplary Configuration of IoT Device>

Subsequently, specific exemplary configurations of the IoT device 72 and the security management entity 73 illustrated in Fig. 11 will be described.

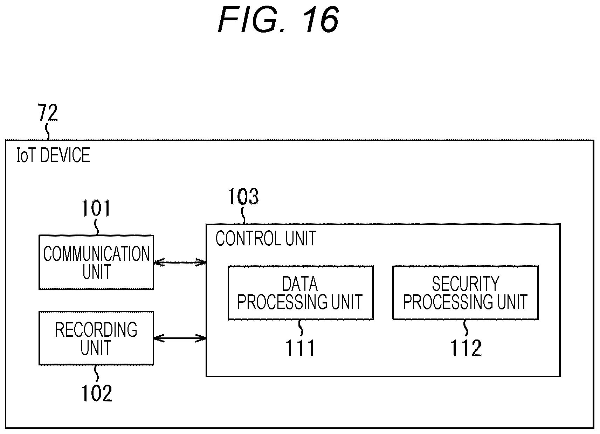

First, the exemplary configuration of the IoT device 72 will be described. Fig. 16 is a diagram illustrating the exemplary configuration of the IoT device 72.

The IoT device 72 illustrated in Fig. 16 includes a communication unit 101, a recording unit 102, and a control unit 103.

The communication unit 101 communicates with the other IoT device 72 and the security management entity 73 via a network, receives various data (information) that has been transmitted and supplies the data to the control unit 103, and transmits the data supplied from the control unit 103. The recording unit 102 records the data supplied from the control unit 103 and supplies the recorded data to the control unit 103.

The control unit 103 controls an operation of the entire IoT device 72. The control unit 103 includes a data processing unit 111 and a security processing unit 112.

The data processing unit 111 appropriately performs processing such as processing on the data exchanged between the IoT devices 72. For example, the data processing unit 111 performs analysis processing on the raw data, converts the raw data into the analyzed data, and provides the personal ID to the raw data and the analyzed data.

The security processing unit 112 performs processing for security protection according to the security policy indicated by the security policy configuration supplied from the security management entity 73. For example, as the processing for security protection, ciphering processing on the data exchanged between the IoT devices 72, the decryption processing on encrypted data, processing for integrity check, processing regarding authentication to perform authentication of the IoT device 72 that is a communication partner or the IoT device 72, and the like are performed.

### <Exemplary Configuration of Security Management Entity>

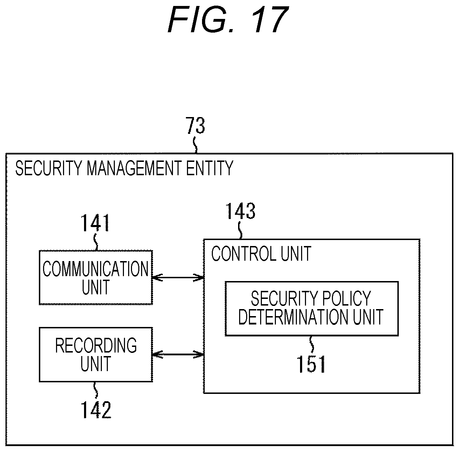

Next, an exemplary configuration of the security management entity 73 will be described. Fig. 17 is a diagram illustrating the exemplary configuration of the security management entity 73.

The security management entity 73 illustrated in Fig. 17 includes a communication unit 141, a recording unit 142, and a control unit 143.

The communication unit 141 communicates with the IoT device 72 via a network, receives various data (information) that has been transmitted and supplies the data to the control unit 143, and transmits the data supplied from the control unit 143. The recording unit 142 records the data supplied from the control unit 143 and supplies the recorded data to the control unit 143.

The control unit 143 controls an operation of the entire security management entity 73. The control unit 143 includes a security policy determination unit 151.

The security policy determination unit 151 determines (select) a security policy for each segment with respect to each IoT device 72 on the basis of the security capability report collected from each IoT device 72.

### <Description of Distribution Processing and Reception Processing>

Here, the processing performed between the IoT device 72 and the security management entity 73 will be described.

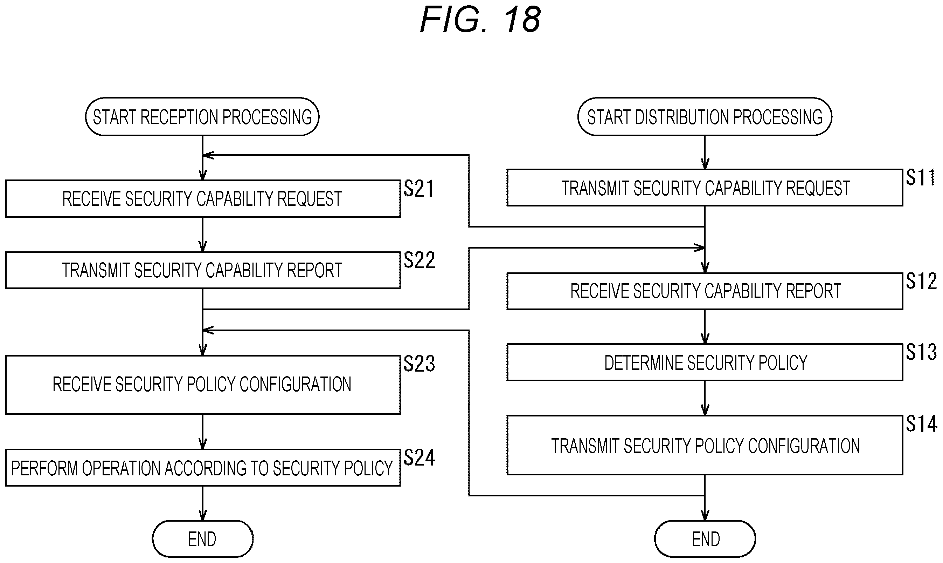

In other words, in the following description, with reference to the flowchart in Fig. 18, the distribution processing performed by the security management entity 73 and the reception processing performed by the IoT device 72 will be described.

In step S11, the communication unit 141 of the security management entity 73 transmits the security capability request.

In other words, the control unit 143 generates the security capability request and supplies the security capability request to the communication unit 141. Then, the communication unit 141 transmits the security capability request supplied from the control unit 143 to the IoT device 72. Note that the security capability request is transmitted to all the IoT devices 72 that can be connected (communicate) to the security management entity 73.

When the security capability request is transmitted, in step S21, the communication unit 101 of the IoT device 72 receives the security capability request transmitted from the security management entity 73 and supplies the security capability request to the control unit 103.

In response to the security capability request supplied from the communication unit 101, the control unit 103 generates the security capability report indicating the capability of the IoT device 72 and supplies the security capability report to the communication unit 101. As a result, for example, the security capability report illustrated in Fig. 13 is generated.

In step S22, the communication unit 101 transmits the security capability report supplied from the control unit 103 to the security management entity 73.

Then, in step S12, the communication unit 141 of the security management entity 73 receives the security capability report transmitted from the IoT device 72 and supplies the security capability report to the control unit 143. Note that, in more detail, when the security capability report is received, Acknowledge is transmitted as described with reference to Fig. 12.

In step S13, the security policy determination unit 151 determines the security policy for each segment with respect to the IoT device 72 on the basis of the security capability report supplied from the communication unit 141.

At this time, the security policy determination unit 151 recognizes the security capability and the network topology of each IoT device 72 with reference to the security capability report received from the other IoT device 72 as necessary and determines the security policy, for example, as described with reference to Fig. 14.

When determining the security policy, the security policy determination unit 151 generates the security policy configuration on the basis of the determination result and supplies the security policy configuration to the communication unit 141.

For example, the security policy determination unit 151 generates the security policy configuration including the Configuration ID, indicating the determined security policy, illustrated in Fig. 14, for each segment of the IoT device 72.

In step S14, the communication unit 141 transmits the security policy configuration supplied from the security policy determination unit 151 to the IoT device 72 and terminates the distribution processing.

Furthermore, in step S23, the communication unit 101 of the IoT device 72 receives the security policy configuration transmitted from the security management entity 73 and supplies the security policy configuration to the control unit 103.

Furthermore, when the security policy configuration is received, the communication unit 101 transmits Acknowledge indicating the reception of the security policy configuration to the security management entity 73 under the control of the control unit 103.

In step S24, the control unit 103 performs an operation according to the security policy indicated by the security policy configuration received in step S23, and the reception processing is terminated.

Specifically, for example, the data processing unit 111 provides the personal ID of the client 71 to the raw data to be transmitted to the other IoT device 72 and performs the analysis processing on the raw data to convert the raw data into the analyzed data to be transmitted to the other IoT device 72.

Furthermore, for example, the security processing unit 112 requests transmission of data necessary for authentication with respect to the other IoT device 72 before transmitting the raw data to which the personal ID has been provided and the analyzed data according to the security policy and authenticates the other IoT device 72. In addition, for example, the security processing unit 112 performs the ciphering processing on the raw data and the analyzed data to be transmitted and applies a digital signature and the like for the integrity check to the raw data and the analyzed data to be transmitted.

Then, after the authentication processing has been performed as necessary, the communication unit 101 transmits the raw data and the analyzed data on which the ciphering processing, the digital signature, and the like has been applied according to the security policy and to which the personal ID is provided to the other IoT device 72 that is a communication partner.

Moreover, for example, in a case where the IoT device 72 is on the data-receiving-side, the security processing unit 112 transmits data necessary for authentication to the other IoT device 72 that is the communication partner before receiving the data and is authenticated. Furthermore, the security processing unit 112 performs decryption and the integrity check on the encrypted data received from the other IoT device 72, for example.

Note that, the processing for security protection of the data performed at the time of transmitting the data to the other IoT device 72 or at the time of receiving the data transmitted from the other IoT device 72 is not limited to the authentication, the ciphering, the integrity check, and the like, and any other processing may be performed.

As described above, the security management entity 73 receives the security capability report from the IoT device 72, determines the security policy, and transmits the security policy configuration indicating the determination result to the IoT device 72.

Furthermore, the IoT device 72 transmits the security capability report in response to the request from the security management entity 73, receives the security policy configuration, and performs an operation according to the designated security policy.

In this way, it is possible to flexibly and appropriately determine a security policy for each segment of each IoT device 72 for the network configuration of the healthcare IoT system and to sufficiently protect the security. In other words, sufficient security tolerance can be efficiently obtained.

### <Second Embodiment>

### <Regarding Determination of Security Policy>

By the way, depending on a state of a communication path before and after an IoT device 72 to be an ID providing point or a conversion point, that is, a state of a segment between the IoT devices 72, security tolerance of the segment varies.

In other words, the security tolerance varies, for example, depending on whether communication through the segment is wireless communication or wired communication.

Furthermore, even if the communication is wireless communication, the security tolerance varies depending on whether the communication is the 3G network, the Global System for Mobile Communications (GSM) (registered trademark), the 4G network, or the wireless Local Area Network (LAN). Moreover, even if the communication is wired communication, the security tolerance varies depending on whether the communication is the Asymmetric Digital Subscriber Line (ADSL), or optical fiber communication, or whether IP Sec is applied.

In this way, depending on the state of the segment between the IoT devices 72, the tolerable security varies for each segment. Therefore, a security policy may be determined according to the state related to the security of the segment.

In such a case, a security management entity 73 requests a report regarding a degree of risk from the viewpoint of the security of the segment, particularly, regarding the segments before and after the ID providing point and the conversion point for each segment of the IoT device 72 to each IoT device 72. In other words, as information regarding the security used to determine the security policy, the report regarding a segment security state that is the state of the segment between the IoT devices 72 related to the security is requested.

The IoT device 72 that has received the request from the security management entity 73 generates a segment security report indicating the segment security state for each segment between the IoT device 72 and other IoT device 72 and transmits the segment security report to the security management entity 73.

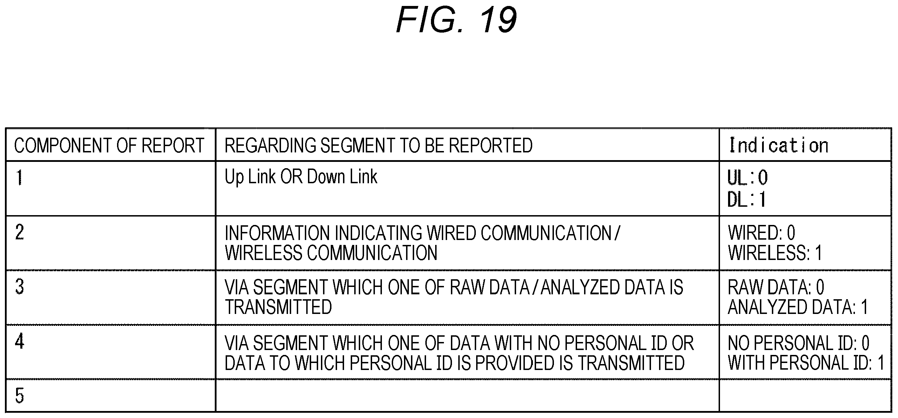

For example, as illustrated in Fig. 19, the segment security report is information including a flag for each of components "1" to "4" related to the security of the segment.

In the example illustrated in Fig. 19, the flag of the component "1" indicates whether the segment is an up link (Up Link) or a down link (Down Link) as viewed from the IoT device 72. Specifically, if a value of the flag of the component "1" is "0", it is indicated that the segment is the up link, and if the value of the flag of the component "1" is "1", it is indicated that the segment is the down link.

Furthermore, the flag of the component "2" indicates whether the communication in the segment is wired communication or wireless communication. Specifically, if a value of the flag of the component "2" is "0", it is indicated that the communication is wired communication, and if the value of the flag of the component "2" is "1", it is indicated that the communication is wireless communication.

The flag of the component "3" indicates whether the data transmitted and received via the segment is the raw data or the analyzed data, that is, which one of the raw data or the analyzed data is transmitted via the segment. More specifically, if a value of the flag of the component "3" is "0", it is indicated that the raw data is transmitted and received via the segment, and if the value of the flag of the component "3" is "1", the analyzed data is transmitted and received via the segment.

The flag of the component "4" indicates whether or not the data transmitted and received (transmitted) via the segment is data to which the personal ID is provided, that is, which one of the data to which the personal ID is provided or the data to which the personal ID is not provided is transmitted via the segment. More specifically, if a value of the flag of the component "4" is "0", it is indicated that the data to which the personal ID is not provided is transmitted and received via the segment, and if the value of the flag of the component "4" is "1", it is indicated that the data to which the personal ID is provided is transmitted and received via the segment.

When receiving the segment security report for each segment of the IoT device 72, the security management entity 73 determines the security policy on the basis of the segment security state indicated by the segment security report.

Specifically, for example, for a segment in which values of the flags of the components "4" and "5" are "1" and data with high security importance is transmitted and received, it is sufficient that the security policy indicated by the Configuration IDs "3" and "4" illustrated in Fig. 14 be selected, for example.

In the first embodiment, the security policy is determined on the basis of the security capability report. Whereas, in this example, the security policy is determined on the basis of the segment security report. In other words, in the present embodiment, the security policy is determined on the basis of the state of the segment adjacent to the IoT device 72 in which communication is performed from the viewpoint of the security.

### <Description of Distribution Processing and Reception Processing>

Here, processing performed between the IoT device 72 and the security management entity 73 in a case where the security policy is determined on the basis of the segment security report will be described.

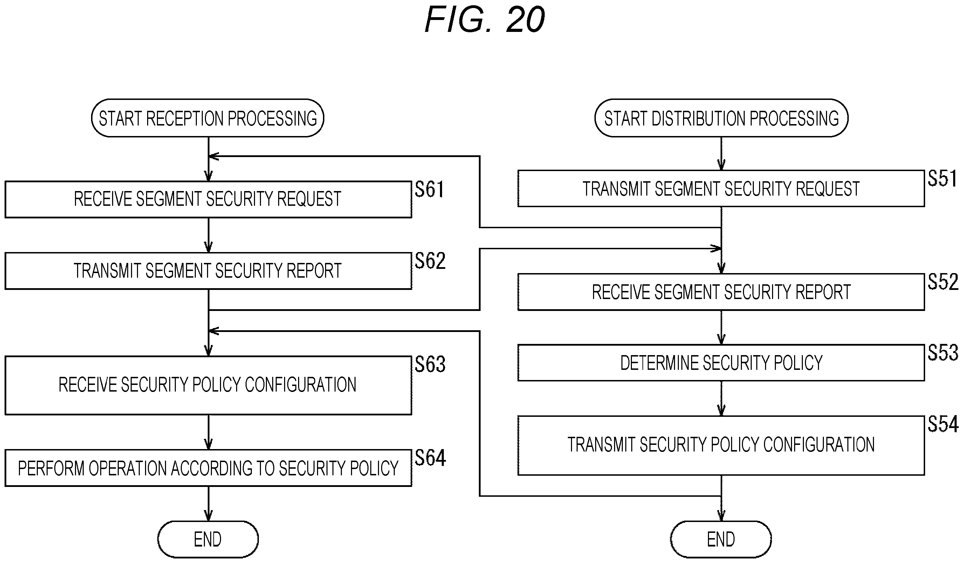

In other words, in the following description, with reference to the flowchart in Fig. 20, distribution processing performed by the security management entity 73 and reception processing performed by the IoT device 72 will be described.

In step S51, a communication unit 141 of the security management entity 73 transmits a segment security request for requesting transmission of the segment security report.

In other words, a control unit 143 generates the segment security request and supplies the segment security request to the communication unit 141. Then, the communication unit 141 transmits the segment security request supplied from the control unit 143 to the IoT device 72. Note that the segment security request is transmitted to all the IoT devices 72 that can be connected (communicate) to the security management entity 73.

When the segment security request is transmitted, in step S61, a communication unit 101 of the IoT device 72 receives the segment security request transmitted from the security management entity 73 and supplies the segment security request to the control unit 103.

The control unit 103 generates the segment security report indicating the segment security state of the segment connected to the IoT device 72, that is, the segment adjacent to the IoT device 72 in response to the segment security request supplied from the communication unit 101 and supplies the segment security report to the communication unit 101. With this operation, for example, the segment security report including the flag of each component illustrated in Fig. 19 is generated.

In step S62, the communication unit 101 transmits the segment security report supplied from the control unit 103 to the security management entity 73.

Then, in step S52, the communication unit 141 of the security management entity 73 receives the segment security report transmitted from the IoT device 72 and supplies the segment security report to the control unit 143.

In step S53, a security policy determination unit 151 determines the security policy for each segment with respect to the IoT device 72 on the basis of the segment security report supplied from the communication unit 141.

Note that, when the security policy is determined, not only the segment security report but also the security capability report may be referred. In this case, the security management entity 73 receives the segment security report and the security capability report from the IoT device 72.

When determining the security policy, the security policy determination unit 151 generates the security policy configuration on the basis of the determination result and supplies the security policy configuration to the communication unit 141.

Then, thereafter, processing in step S54 is performed, a security policy configuration is transmitted, and the distribution processing is terminated. However, since the processing in step S54 is similar to the processing in step S14 in Fig. 18, description thereof will be omitted.

Furthermore, when the security policy configuration is transmitted, the IoT device 72 performs processing in steps S63 and S64, and the reception processing is terminated. However, since the processing is similar to the processing in steps S23 and S24 in Fig. 18, description thereof will be omitted.

As described above, the security management entity 73 receives the segment security report from the IoT device 72, determines the security policy, and transmits the security policy configuration indicating the determination result to the IoT device 72.

Furthermore, the IoT device 72 transmits the segment security report in response to the request from the security management entity 73, receives the security policy configuration, and performs an operation according to the designated security policy.

In this way, it is possible to flexibly and appropriately determine the security policy according to the security state of the segment for each segment of each IoT device 72, and the security can be sufficiently protected. In other words, sufficient security tolerance can be efficiently obtained.

### <Third Embodiment>

### <Regarding Determination of Security Policy>

In the embodiments described above, the security management entity 73 determines the security policy on the basis of the security capability report and the segment security report received from each IoT device 72.

For example, a healthcare IoT system may include a device or a sensor that does not have a security measure as the IoT device 72.

Furthermore, even when the security management entity 73 intends to collect the security capability report and the segment security report, there is a case where the IoT device 72 does not have a reporting capability. That is, there is a case where the IoT device 72 does not have a capability for responding to a request to transmit requested information to a partner.

In such a case, the security management entity 73 will not know how to design the healthcare IoT system. In other words, it is difficult to determine an appropriate security policy for a segment of the IoT device 72.

Therefore, for example, the IoT device 72 having the reporting capability may transmit the security capability request and the segment security request to the other IoT device 72 adjacent to the IoT device 72.

In this case, in a case where the other IoT device 72 does not respond to the transmission of the security capability request and the segment security request, the IoT device 72 transmits a report indicating that the other IoT device 72 does not have the reporting capability to the security management entity 73. In other words, the report (information) indicating that the IoT device 72 that does not have the reporting capability exists is transmitted.

With this operation, since the security management entity 73 can recognize that the IoT device 72 is connected to the other IoT device 72 that does not have the reporting capability, the report regarding the other IoT device 72 can be considered at the time when the security policy is determined.

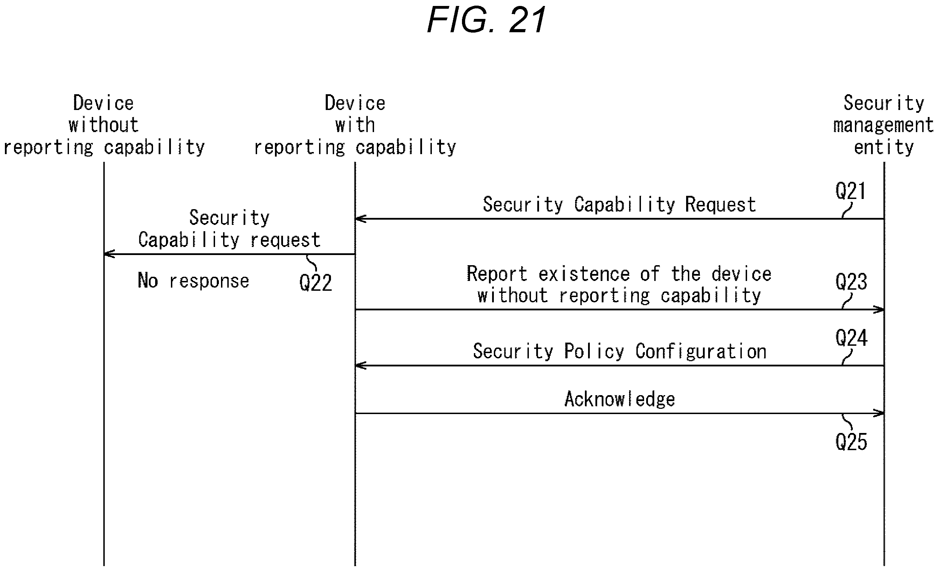

In a case where the security management entity 73 determines the security policy with an assistance of the IoT device 72 in this way, for example, communication illustrated in Fig. 21 is performed between the security management entity 73 and the IoT device 72.

In other words, first, as indicated by an arrow Q21, the security management entity 73 transmits the security capability request to the IoT device 72, and the IoT device 72 receives the security capability request.

Note that the segment security request may be transmitted to the IoT device 72, and both of the security capability request and the segment security request may be transmitted.

When receiving the security capability request, the IoT device 72 transmits the security capability request to the other IoT device 72 adjacent to the IoT device 72 as indicated by an arrow Q22. Furthermore, the IoT device 72 transmits the security capability report of the IoT device 72 to the security management entity 73 in response to the security capability request.

Thereafter, when the other neighboring IoT device 72 responds to the request and transmits the security capability report, the IoT device 72 receives the security capability report and transmits the security capability report to the security management entity 73. Hereinafter, it is assumed that the other IoT device 72 adjacent to the IoT device 72 be particularly referred to as a neighboring IoT device.

Note that, in this case, although the neighboring IoT device responds to the IoT device 72, the neighboring IoT device may directly transmit the security capability report to the security management entity 73.

On the other hand, in a case where the neighboring IoT device does not respond to the transmission of the security capability request for a certain period of time, the IoT device 72 assumes that the neighboring IoT device does not have the reporting capability.

Then, as indicated by an arrow Q23, the IoT device 72 transmits a report (information) indicating that the neighboring IoT device that does not have the reporting capability exists as a device adjacent to the IoT device 72, in other words, a report indicating that the neighboring IoT device does not have the reporting capability to the security management entity 73. The security management entity 73 receives the report indicating that the neighboring IoT device that does not have the reporting capability exists from the IoT device 72.

The security management entity 73 determines the security policy on the basis of the security capability report of the IoT device 72 and the report indicating that the neighboring IoT device that does not have the reporting capability exists and generates a security policy configuration.

In this case, for example, regarding the segment between the IoT device 72 and the neighboring IoT device that does not have the reporting capability, the security policy is not particularly determined, and a security measure determined in advance between the IoT device 72 and the neighboring IoT device is applied. In other words, a security policy indicating that processing for security protection that has been determined between the IoT device 72 and the neighboring IoT device in advance is performed is determined.

The security management entity 73 transmits the generated security policy configuration to the IoT device 72 as indicated by an arrow Q24.

Furthermore, when receiving the security policy configuration from the security management entity 73, as indicated by an arrow Q25, the IoT device 72 transmits Acknowledgment indicating the reception of the security policy configuration to the security management entity 73.

Furthermore, there is a case where the IoT device 72 can recognize the security capability of the neighboring IoT device from the exchange of the data between the IoT device 72 and the neighboring IoT device after the IoT device 72 has received the security policy configuration and started a normal operation.

This is because there is a case where the processing for security protection such as the authentication and the ciphering is appropriately performed when the IoT device 72 exchanges the data with the neighboring IoT device.

In other words, between the IoT device 72 and the neighboring IoT device that does not have the reporting capability, the processing determined between the devices in advance is performed as the processing for security protection. Therefore, the IoT device 72 can specify at least a part of the security capability of the neighboring IoT device from the exchange of the data with the neighboring IoT device.

With this operation, the IoT device 72 can recognize the security capability indicated by the Capability ID described with reference to Fig. 13 of the neighboring IoT device, for example.

In this way, when the IoT device 72 can recognize (specify) the security capability of the neighboring IoT device after starting to exchange the data with the neighboring IoT device although the neighboring IoT device does not have the reporting capability, the IoT device 72 may report the security capability of the neighboring IoT device to the security management entity 73.

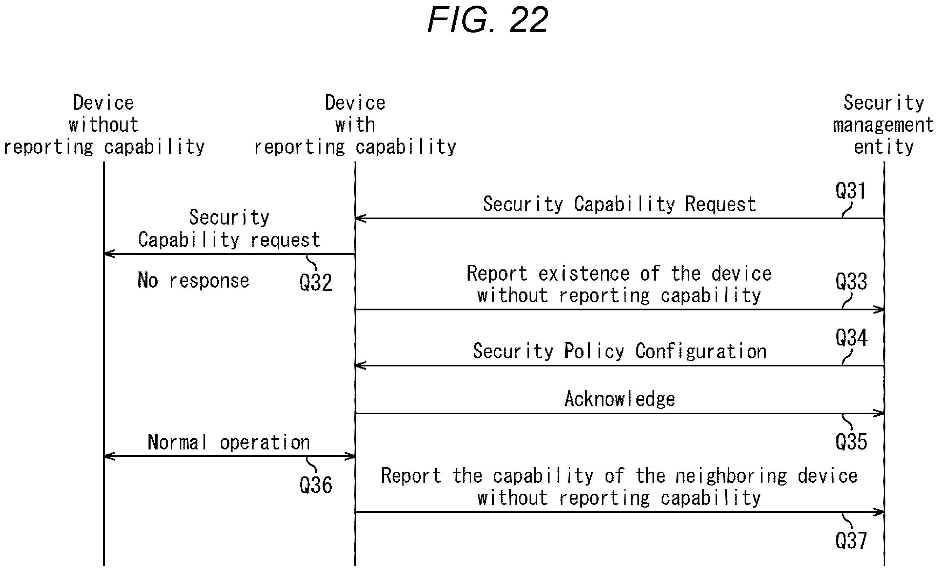

In this case, for example, communication illustrated in Fig. 22 is performed between the security management entity 73 and the IoT device 72.

Note that, in Fig. 22, processing indicated by arrows Q31 to Q35 is similar to the processing indicated by the arrows Q21 to Q25 in Fig. 21, description thereof will be omitted.

When receiving the security policy configuration from the security management entity 73, the IoT device 72 exchanges the data with the neighboring IoT device according to the security policy indicated by the security policy configuration as indicated by an arrow Q36. In particular, since the neighboring IoT device does not have the reporting capability in this example, the processing determined between the IoT device 72 and the neighboring IoT device in advance is performed as the processing indicated by the security policy.

Then, it is assumed that the IoT device 72 specify at least a part of the security capability of the neighboring IoT device by such data exchange. In this case, the IoT device 72 transmits the security capability report of the neighboring IoT device indicating the specified security capability to the security management entity 73 as indicated by an arrow Q37.

The security management entity 73 determines the security policy on the basis of the security capability report of the neighboring IoT device.

In this case, for example, the security management entity 73 determines the security policy with a neighboring IoT device of the other IoT device 72 connected to the neighboring IoT device. However, the security policy of the IoT device 72 may be determined again as necessary.

When the security policy is determined, the security management entity 73 transmits the security policy configuration according to the determination result to the other IoT device 72.

### <Description of Distribution Processing>

Here, processing performed by the IoT device 72 and the security management entity 73 in a case where the operations illustrated in Figs. 21 and 22 is performed will be described.

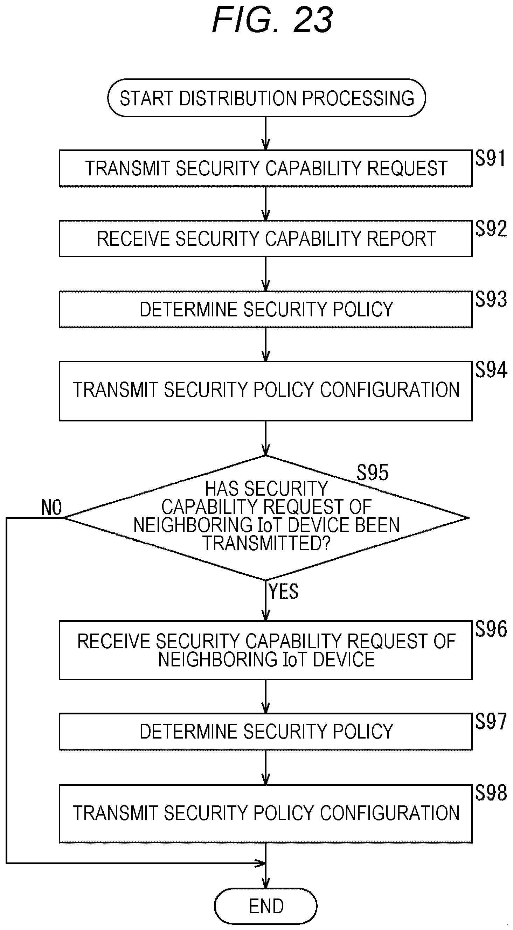

First, with reference to the flowchart in Fig. 23, distribution processing performed by the security management entity 73 will be described.

When the distribution processing starts, processing in step S91 is performed, and the security capability request is transmitted. However, the processing in step S91 is similar to the processing in step S11 in Fig. 18, description thereof will be omitted. However, in this case, the security capability request is further transmitted (transferred) from the IoT device 72 to the neighboring IoT device.

Then, since the security capability report of the IoT device 72 is transmitted from the IoT device 72, the communication unit 141 receives the security capability report transmitted from the IoT device 72 and supplies the security capability report to the control unit 143 in step S92.

More specifically, in step S92, in a case where the neighboring IoT device has the reporting capability, the security capability report of the IoT device 72 and the security capability report of the neighboring IoT device are transmitted from the IoT device 72. In this case, the communication unit 141 receives these security capability reports and supplies the security capability reports to the control unit 143.

Furthermore, in a case where the neighboring IoT device does not have the reporting capability of the security capability, in step S92, the security capability report of the IoT device 72 and a report regarding the neighboring IoT device, that is, a report indicating that the neighboring IoT device that does not have the reporting capability exists are transmitted from the IoT device 72. In this case, the communication unit 141 receives the security capability report and the report indicating that the neighboring IoT device that does not have the reporting capability exists and supplies the reports to the control unit 143.

In step S93, the security policy determination unit 151 determines the security policy on the basis of the security capability report received in step S92. In this case, the security policy is determined for each segment of the IoT device 72 and the neighboring IoT device on the basis of the security capability report of the IoT device 72 and the security capability report of the neighboring IoT device or the report indicating that the neighboring IoT device that does not have the reporting capability exists.

For example, in a case where the neighboring IoT device does not have the reporting capability, the processing determined between the neighboring IoT device and the IoT device 72 in advance is performed as the processing for security protection between the neighboring IoT device and the IoT device 72.

When the security policy is determined, the security policy determination unit 151 generates a security policy configuration according to the determination result and supplies the security policy configuration to the communication unit 141.

In step S94, the communication unit 141 transmits the security policy configuration supplied from the security policy determination unit 151 to the IoT device 72.

Furthermore, in a case where the report indicating that the neighboring IoT device that does not have the reporting capability exists has been received in step S92, there is a case where the security capability report of the neighboring IoT device is transmitted from the IoT device 72 after the exchange of the data between the IoT device 72 and the neighboring IoT device is started. This is because there is a case where the IoT device 72 specifies the security capability of the neighboring IoT device as described above.

In step S95, the security policy determination unit 151 determines whether or not the security capability report of the neighboring IoT device has been transmitted from the IoT device 72.

In a case where it is determined in step S95 that the security capability report has not been transmitted, processing in steps S96 to S98 is not performed, and the distribution processing is terminated.

Whereas, in a case where it is determined in step S95 that the security capability report has been transmitted, in step S96, the communication unit 141 receives the security capability report of the neighboring IoT device transmitted from the IoT device 72 and supplies the security capability report to the control unit 143.

In step S97, the security policy determination unit 151 determines a security policy of the other IoT device 72, different from the IoT device 72, connected to the neighboring IoT device on the basis of the security capability report received in step S96.

At this time, if there is a case where the security capability report has been received from the other IoT device 72, the security policy determination unit 151 determines the security policy by using the security capability report. Note that the security policies of the IoT device 72 and the neighboring IoT device may be determined again (updated).

Furthermore, the security policy determination unit 151 generates a security policy configuration of the other IoT device 72 indicating the determined security policy and supplies the security policy configuration to the communication unit 141.

In step S98, the communication unit 141 transmits the security policy configuration supplied from the security policy determination unit 151 to the other IoT device 72, and the distribution processing is terminated. With this operation, in the other IoT device 72, the data can be exchanged between the other IoT device 72 and the neighboring IoT device according to the security policy considering the security capability of the neighboring IoT device.

As described above, the security management entity 73 receives the reports regarding not only the IoT device 72 but also the neighboring IoT device and determines the security policy. In this way, it is possible to flexibly and appropriately determine the security policy for each segment of each IoT device 72, and the security can be sufficiently protected. In other words, sufficient security tolerance can be efficiently obtained.

### <Description of Reception Processing>

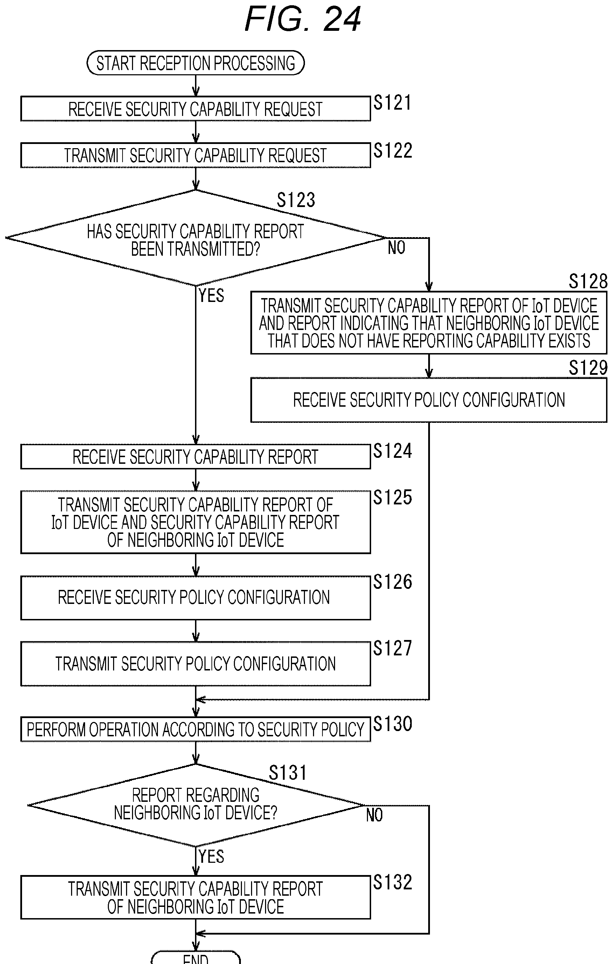

Next, reception processing performed by the IoT device 72 when the distribution processing described with reference to Fig. 23 is performed will be described. In other words, in the following description, with reference to the flowchart in Fig. 24, the reception processing performed by the IoT device 72 will be described.

In step S121, the communication unit 101 receives the security capability request transmitted from the security management entity 73 and supplies the security capability request to the control unit 103. Here, the security capability request transmitted by the processing in step S91 in Fig. 23 is received.

Furthermore, the control unit 103 supplies the received security capability request to the communication unit 101 and controls transmission to the neighboring IoT device. In other words, in step S122, the communication unit 101 transmits the security capability request supplied from the control unit 103 to the neighboring IoT device.

In this case, when the neighboring IoT device has the reporting capability of the security capability, the security capability report is transmitted from the neighboring IoT device to the IoT device 72 in response to the security capability request. On the other hand, in a case where the neighboring IoT device does not have the reporting capability, for example, no particular response to the IoT device 72 is made.

In step S123, the control unit 103 determines whether or not the security capability report is transmitted from the neighboring IoT device.

In a case where the it is determined in step S123 that the security capability report has been transmitted, in step S124, the communication unit 101 receives the security capability report transmitted from the other neighboring IoT device and supplies the security capability report to the control unit 103.

Furthermore, the control unit 103 generates the security capability report of the IoT device 72. The control unit 103 supplies the generated security capability report of the IoT device 72 and the security capability report of the neighboring IoT device received from the neighboring IoT device to the communication unit 101.

In step S125, the communication unit 101 transmits the security capability report of the IoT device 72 and the security capability report of the neighboring IoT device transmitted from the control unit 103 to the security management entity 73.

With this transmission, in step S92 in Fig. 23, the security capability reports of the IoT device 72 and the neighboring IoT device are received, and the security policy configuration for each segment of the IoT device 72 and the neighboring IoT device are transmitted by the processing in step S94 in Fig. 23.

In step S126, the communication unit 101 receives the security policy configuration from the security management entity 73 and supplies the security policy configuration to the control unit 103. Furthermore, the control unit 103 supplies the security policy configuration of the neighboring IoT device of the received security policy configurations to the communication unit 101. Furthermore, in more detail, when the security policy configuration is received, Acknowledge is transmitted as described with reference to Figs. 21 and 22.

In step S127, the communication unit 101 transmits the security policy configuration of the neighboring IoT device supplied from the control unit 103 to the neighboring IoT device.

When the security policy configuration is obtained in this way, thereafter, the procedure proceeds to step S130.

On the other hand, in a case where it is determined in step S123 that the security capability report has not been transmitted from the neighboring IoT device, in other words, in a case where no response has been made for a certain time by the neighboring IoT device, the procedure proceeds to step S128.

In this case, the control unit 103 generates the report indicating that the neighboring IoT device that does not have the reporting capability exists and supplies the report to the communication unit 101, and supplies the security capability report of the IoT device 72 generated in response to the security capability request to the communication unit 101.

In step S128, the communication unit 101 transmits the security capability report of the IoT device 72 supplied from the control unit 103 and the report indicating that the neighboring IoT device that does not have the reporting capability exists to the security management entity 73.

These reports are received in step S92 in Fig. 23, and the security policy configuration of the IoT device 72 is transmitted by the processing in step S94 in Fig. 23.

In step S129, the communication unit 101 receives the security policy configuration of the IoT device 72 transmitted from the security management entity 73 and supplies the security policy configuration to the control unit 103. Thereafter, the procedure proceeds to step S130.

When the processing in step S129 or step S127 is performed, processing in step S130 is performed.

In step S130, the control unit 103 performs an operation according to a security policy indicated by the security policy configuration of the IoT device 72 received in step S126 or step S129. Note that, in step S130, the processing similar to the processing in step S24 in Fig. 18 is performed.

In step S131, the control unit 103 determines whether or not the security capability of the neighboring IoT device is reported.

For example, when the data is exchanged with the neighboring IoT device as the processing in step S130, there is a case where the security capability of the neighboring IoT device can be recognized (specified).

For example, in step S131, it is determined to report the security capability in a case where it is determined in step S123 that the security capability report of the neighboring IoT device has not been transmitted and at least a part of the security capability of the neighboring IoT device is specified by the processing in step S130.

In a case where it is determined not to report the security capability in step S131, processing in step S132 is not performed, and the reception processing is terminated.

On the other hand, in a case where it is determined to report the security capability in step S131, the control unit 103 generates the security capability report indicating the specified security capability of the neighboring IoT device and supplies the security capability report to the communication unit 101, and the procedure proceeds to step S132.

In step S132, the communication unit 101 transmits the security capability report of the neighboring IoT device supplied from the control unit 103 to the security management entity 73, and the reception processing is terminated. In this case, the security capability report transmitted in step S132 is received in step S96 in Fig. 23.

As described above, the IoT device 72 transmits the security capability request to the neighboring IoT device in response to the request from the security management entity 73 and appropriately transmits the security capability report of the neighboring IoT device. In this way, the security management entity 73 can flexibly and appropriately determine the security policy for each segment of each IoT device 72, and the security can be sufficiently protected. In other words, sufficient security tolerance can be efficiently obtained.

Note that, here, an example has been described in which the security capability report is exchanged between the IoT device 72 and the security management entity 73 as information regarding the security. However, as described above, the security policy may be determined by exchanging at least one of the security capability report or the segment security report as the information regarding the security.

### <First Modification of Third Embodiment>

### <Description of Distribution Processing>

Furthermore, by preventing connection of the IoT device 72 that does not have the reporting capability of the security capability and the segment security state to the network of the healthcare IoT system, security tolerance may be enhanced.

Hereinafter, processing performed by the security management entity 73 and the IoT device 72 in such a case will be described.

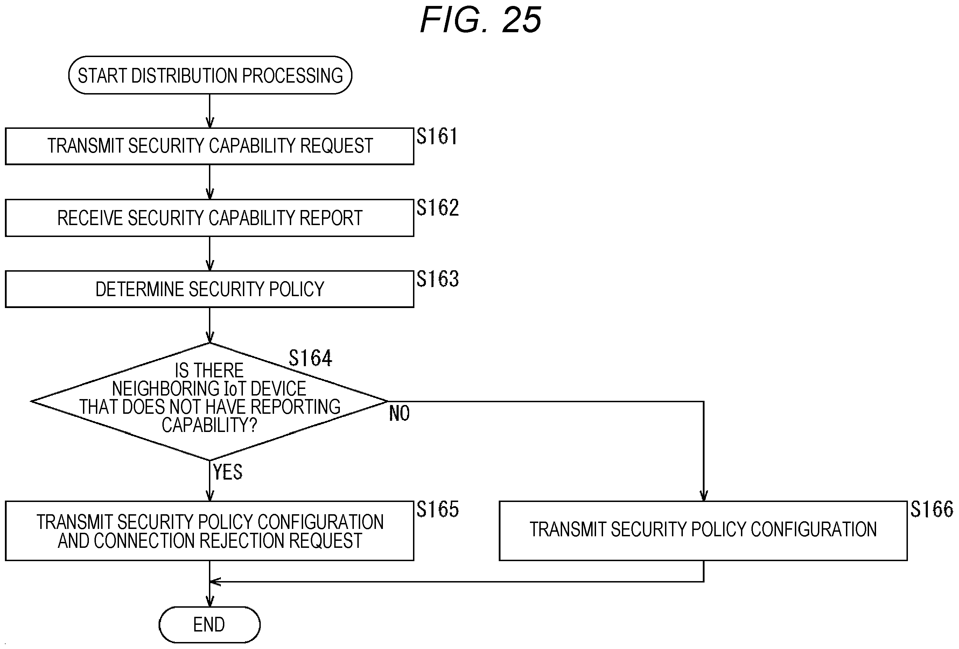

First, with reference to the flowchart in Fig. 25, the distribution processing performed by the security management entity 73 will be described. Note that, since processing in steps S161 to S163 is similar to the processing in steps S91 to S93 in Fig. 23, description thereof will be omitted. Note that, in step S162, one of the security capability report of the neighboring IoT device or the report indicating that the neighboring IoT device that does not have the reporting capability exists is received according to whether or not the neighboring IoT device has the reporting capability.

In step S164, the security policy determination unit 151 determines whether or not the neighboring IoT device that does not have the reporting capability exists.

For example, in step S164, in a case where the report indicating that the neighboring IoT device that does not have the reporting capability exists has been received in step S162, it is determined that the neighboring IoT device that does not have the reporting capability exists.

In a case where it is determined in step S164 that the neighboring IoT device that does not have the reporting capability exists, the procedure proceeds to step S165.

In this case, the security policy determination unit 151 generates the security policy configuration regarding the IoT device 72 and supplies the security policy configuration to the communication unit 141, and generates a connection rejection request for requesting a rejection to connect to the neighboring IoT device with respect to the IoT device 72 and supplies the request to the communication unit 141. In other words, the connection rejection request for requesting to reject to communicate with the neighboring IoT device that does not have the reporting capability, that is, to reject to exchange data with the neighboring IoT device that does not have the reporting capability is generated.

In step S165, the communication unit 141 transmits the security policy configuration and the connection rejection request supplied from the security policy determination unit 151 to the IoT device 72, and the distribution processing is terminated. In this case, the security policy configuration regarding the segment with the neighboring IoT device that has the reporting capability is transmitted.

Whereas, in a case where it is determined in step S164 that the neighboring IoT device that does not have the reporting capability does not exist, the procedure proceeds to step S166.

In this case, the security policy determination unit 151 generates the security policy configuration for each of the IoT device 72 and the neighboring IoT device and supplies the security policy configurations to the communication unit 141.

In step S166, the communication unit 141 transmits the security policy configuration supplied from the security policy determination unit 151 to the IoT device 72, and the distribution processing is terminated.

As described above, the security management entity 73 generates the connection rejection request for the neighboring IoT device that does not have the reporting capability and requests for rejecting to connect with the neighboring IoT device to the IoT device 72. With this operation, it is possible to exclude the connection with an inappropriate neighboring IoT device and enhance the security tolerance.

### <Description of Reception Processing>

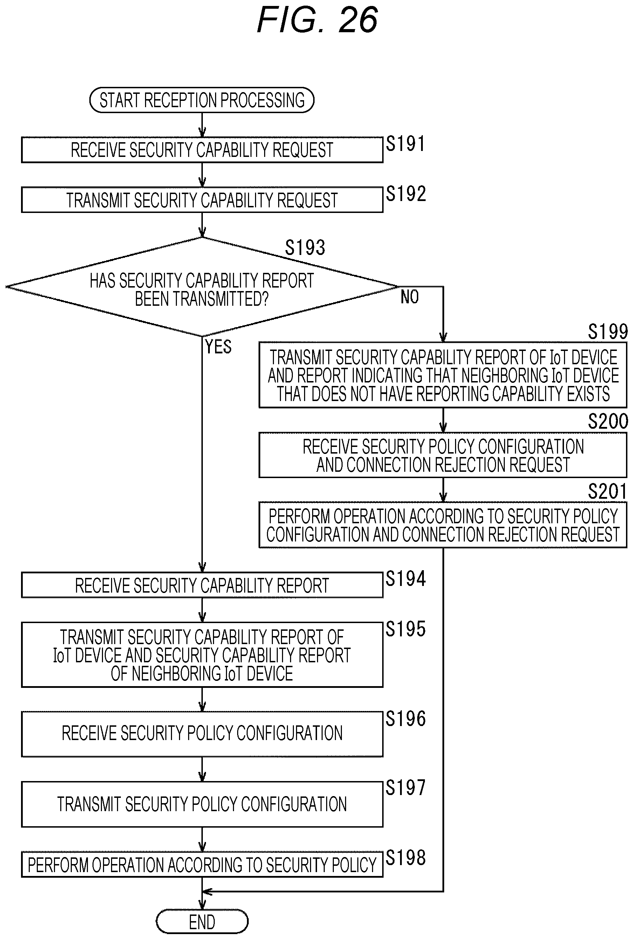

Furthermore, when the distribution processing illustrated in Fig. 25 is performed, reception processing illustrated in Fig. 26 is performed by the IoT device 72. Hereinafter, with reference to the flowchart in Fig. 26, the reception processing by the IoT device 72 will be described.

Note that, since processing in steps S191 to S198 is similar to the processing in steps S121 to S127 and step S130 in Fig. 24, description thereof will be omitted. When the processing in step S198 is performed, the reception processing is terminated.

Furthermore, in a case where it is determined in step S193 that the security capability report of the neighboring IoT device has not been transmitted, that is, in a case where the neighboring IoT device does not have the reporting capability, the procedure proceeds to step S199.

In step S199, the communication unit 101 transmits the security capability report of the IoT device 72 and the report indicating that the neighboring IoT device that does not have the reporting capability exists to the security management entity 73. Note that, in step S199, the processing similar to the processing in step S128 in Fig. 24 is performed.

When the security capability report of the IoT device 72 and the report indicating that the neighboring IoT device that does not have the reporting capability exists are transmitted to the security management entity 73, the processing in step S165 in Fig. 25 is performed.

With this operation, the security policy configuration of the IoT device 72 and the connection rejection request to the neighboring IoT device are transmitted from the security management entity 73 to the IoT device 72.

In step S200, the communication unit 101 receives the security policy configuration and the connection rejection request transmitted from the security management entity 73 and supplies the security policy configuration and the connection rejection request to the control unit 103.

In step S201, the control unit 103 performs an operation according to the security policy configuration and the connection rejection request received in step S200, and the reception processing is terminated.

In this case, for example, the control unit 103 performs control so as not to exchange data with the neighboring IoT device that does not have the reporting capability according to the connection rejection request. Whereas, with the neighboring IoT device having the reporting capability, the operation is performed according to the security policy indicated by the security policy configuration.

As described above, the IoT device 72 receives the security policy configuration and the connection rejection request regarding the neighboring IoT device from the security management entity 73 and performs an operation according to the received security policy configuration and connection rejection request. With this operation, it is possible to exclude the connection with an inappropriate neighboring IoT device and enhance the security tolerance.

Note that, here, as an example, a case has been described where the connection to the neighboring IoT device that does not have the security capability reporting capability is not made. However, similarly, it is possible not to make the connection with the neighboring IoT device that does not have the segment security state reporting capability.

### <Fourth Embodiment>

### <Regarding Determination of Security Policy>

Furthermore, in the above, an example has been described where the security policy is determined on the basis of the security capability and the segment security state by the security management entity 73.

However, even if it is attempted to simply determine the security policy for the segments before and after the ID providing point and the conversion point and the like from the information above, there is a case where an appropriate security policy cannot be determined.

For example, before the conversion point at which raw data is converted into analyzed data, that is, a segment between an IoT device 72, that is set to be the conversion point, for receiving the raw data and other IoT device 72 for transmitting the raw data to the IoT device 72, it is expected that the raw data is frequently transmitted. However, since the raw data exchanged via the segment is data before being analyzed, it can be determined that security importance of the raw data is low.

Therefore, for example, a security policy in which integrity check is omitted can be applied to such raw data. However, in consideration of a traffic amount of the raw data (communication amount), that is, a data amount of the raw data to be exchanged, it cannot be said that the application of the security policy in which the integrity check is omitted is optimal.

Therefore, by determining the security policy on the basis of information regarding the traffic amount in the segment obtained as information regarding security by the security management entity 73, it is possible to apply a more appropriate security policy.

Note that, when the security policy is determined, it is possible to consider not only the traffic amount of the segment but also the security capability and the segment security state. In other words, the security policy may be determined on the basis of at least one of the security capability or the segment security state and the traffic amount. However, here, to simplify the description, description will be continued as assuming that the security capability and the traffic amount are considered.

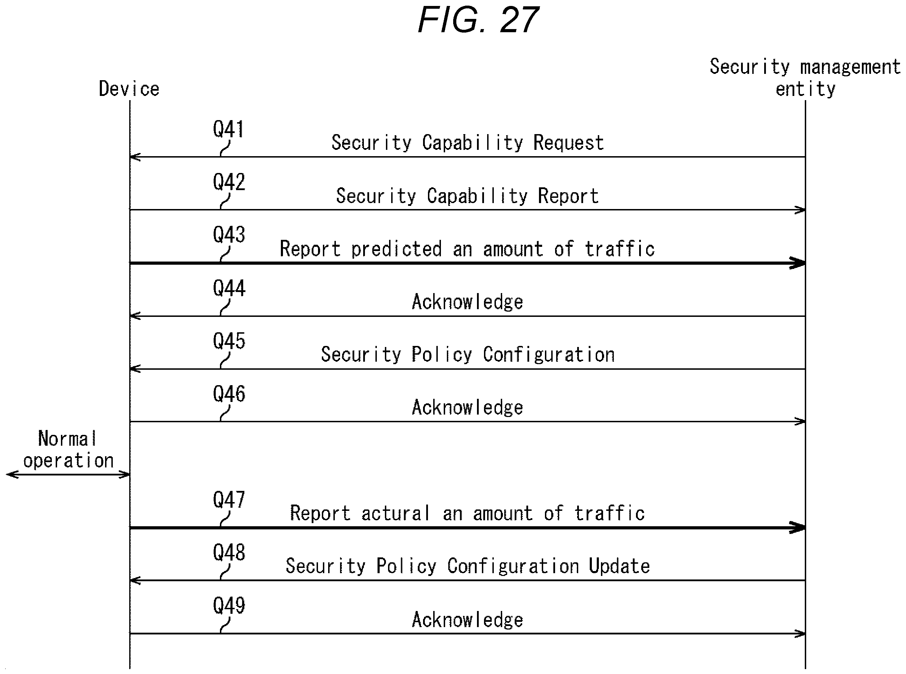

In such a case, for example, communication illustrated in Fig. 27 is performed between the security management entity 73 and the IoT device 72.

Note that, in Fig. 27, since processing indicated by arrows Q41 and Q42 is similar to the processing indicated by the arrows Q11 and Q12 in Fig. 12, description thereof will be omitted. In these processing, a security capability report is transmitted in response to a security capability request.

Furthermore, when receiving the security capability request, the IoT device 72 generates a predicted traffic amount report indicating a predicted traffic amount that is a predicted value of the traffic amount of the data exchanged between the IoT device 72 and the other IoT device 72 via the segment for each segment to which the IoT device 72 is connected.

Then, the IoT device 72 transmits the generated predicted traffic amount report to the security management entity 73 as indicated by an arrow Q43.

Here, the predicted traffic amount may be determined, for example, on the basis of a traffic amount of data in the past, or the like, or may be predetermined for each type of data to be exchanged, or the like,.

When receiving the security capability report and the predicted traffic amount report from the IoT device 72, the security management entity 73 transmits Acknowledge indicating the reception of these reports to the IoT device 72 as indicated by an arrow Q44.

Furthermore, the security management entity 73 determines the security policy for each segment of the IoT device 72 on the basis of the security capability report and the predicted traffic amount report that have been received and generates the security policy configuration.

In this case, for example, when the predicted traffic amount is large, a security policy with stronger security tolerance (strength) than a security policy selected (determined) in consideration of only the security capability is selected.

Moreover, as indicated by an arrow Q45, the security management entity 73 transmits the generated security policy configuration to the IoT device 72.

When receiving the security policy configuration from the security management entity 73, the IoT device 72 transmits Acknowledge indicating the reception of the security policy configuration to the security management entity 73 as indicated by an arrow Q46.

Then, thereafter, the IoT device 72 exchanges data with the other IoT device 72 according to the security policy indicated by the received security policy configuration.

As a result, since the IoT device 72 can recognize an actual traffic amount of data for each segment, the IoT device 72 generates a traffic amount report indicating the actual traffic amount and transmits the traffic amount report to the security management entity 73 as indicated by an arrow Q47.

Then, the security management entity 73 determines the security policy again on the basis of the traffic amount report that has been newly received from the IoT device 72 and the security capability report received at a timing indicated by the arrow Q42. In other words, the security policy configuration is updated.

The security management entity 73 transmits the updated security policy configuration to the IoT device 72 as indicated by an arrow Q48.

Furthermore, when receiving the updated security policy configuration, the IoT device 72 transmits Acknowledge indicating the reception of the security policy configuration to the security management entity 73 as indicated by an arrow Q49. Then, thereafter, the IoT device 72 exchanges data with the other IoT device 72 according to the security policy indicated by the updated security policy configuration.

In this way, the security policy can be more appropriately determined by using the predicted traffic amount and the actual traffic amount.

### <Description of Distribution Processing and Reception Processing>

Here, processing performed by the IoT device 72 and the security management entity 73 in a case where the predicted traffic amount and the actual traffic amount are used for the determination of the security policy will be described.

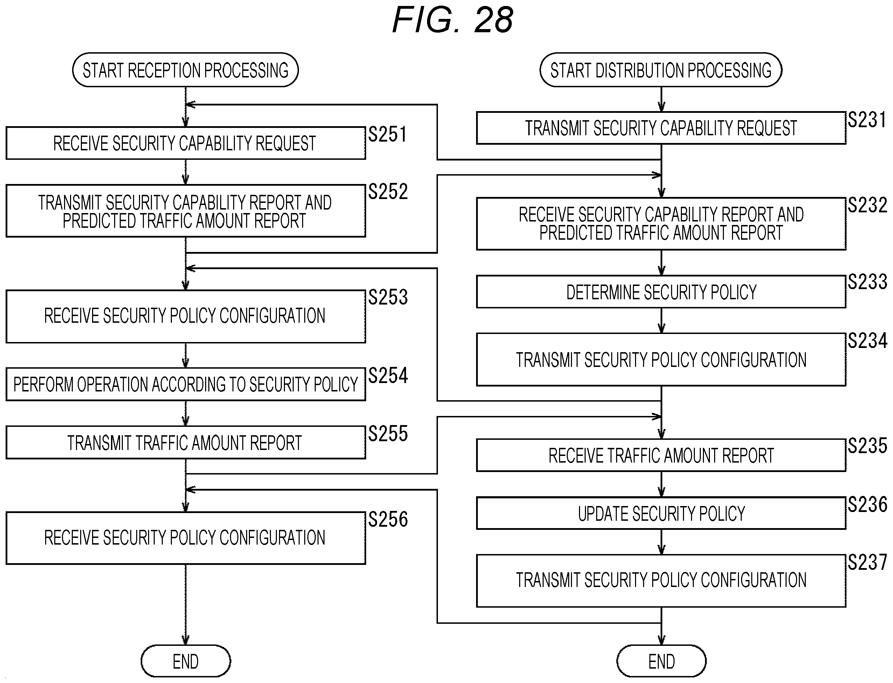

In other words, in the following description, with reference to the flowchart in Fig. 28, the distribution processing performed by the security management entity 73 and the reception processing performed by the IoT device 72 will be described. Note that, since processing in steps S231 and S251 is similar to the processing in steps S11 and S21 in Fig. 18, description thereof will be omitted.

When the processing in step S251 is performed, a control unit 103 of the IoT device 72 generate the security capability report and the predicted traffic amount report in response to the received security capability request and supplies the reports to a communication unit 101.

Then, in step S252, the communication unit 101 transmits the security capability report and the predicted traffic amount report supplied from the control unit 103 to the security management entity 73.

Note that the security capability report and the predicted traffic amount report may be concurrently transmitted or separately transmitted.

When the processing in step S252 is performed, in step S232, a communication unit 141 of the security management entity 73 receives the security capability report and the predicted traffic amount report transmitted from the IoT device 72 and supplies the reports to the control unit 143. Furthermore, when the security capability report and the predicted traffic amount report are received, Acknowledge is transmitted as described with reference to Fig. 27.

In step S233, the security policy determination unit 151 determines the security policy for each segment of the IoT device 72 on the basis of the security capability report and the predicted traffic amount report supplied from the communication unit 141. Then, the security policy determination unit 151 generates the security policy configuration indicating the determined security policy and supplies the security policy configuration to the communication unit 141.

When the security policy configuration is generated, thereafter, processing in step S234 is performed, and the security policy configuration is transmitted. Note that, in step S234, the processing similar to the processing in step S14 in Fig. 18 is performed.

Furthermore, when the security policy configuration is transmitted, the processing in steps S253 and S254 is performed by the IoT device 72. However, since the processing is similar to the processing in steps S23 and S24 in Fig. 18, description thereof will be omitted.

Moreover, when data is exchanged with the other IoT device 72 according to the security policy, an actual traffic amount in the segment between the IoT device 72 and the other IoT device 72 is recognized. Therefore, the control unit 103 generates the traffic amount report indicating the actual traffic amount and supplies the report to the communication unit 101.

In step S255, the communication unit 101 transmits the traffic amount report supplied from the control unit 103 to the security management entity 73.

Then, in step S235, the communication unit 141 of the security management entity 73 receives the traffic amount report transmitted from the IoT device 72 and supplies the traffic amount report to the control unit 143.

In step S236, the security policy determination unit 151 of the control unit 143 updates the security policy on the basis of the traffic amount report supplied from the communication unit 141 and the security capability report received in step S232.

In other words, the security policy is determined again, and the security policy for each segment of the IoT device 72 determined in step S233 is updated according to the redetermination of the security policy.

The security policy determination unit 151 generates a security policy configuration indicating the updated security policy and supplies the security policy configuration to the communication unit 141.

In step S237, the communication unit 141 transmits the security policy configuration supplied from the security policy determination unit 151 to the IoT device 72, and the distribution processing is terminated.

Furthermore, in step S256, the communication unit 101 of the IoT device 72 receives the security policy configuration transmitted from the security management entity 73 and supplies the security policy configuration to the control unit 103. Moreover, at this time, Acknowledge is transmitted as described with reference to Fig. 27.

Then, the control unit 103 uses the security policy configuration supplied from the communication unit 101 as the updated security policy configuration. In other words, when exchanging data with the other IoT device 72, a security processing unit 112 performs processing for security protection according to the security policy indicated by the updated security policy configuration.

In this way, when the security policy is updated by the IoT device 72, the reception processing is terminated.

As described above, the IoT device 72 transmits the predicted traffic amount report and the traffic amount report to the security management entity 73. Furthermore, the security management entity 73 determines and updates the security policy in consideration of the predicted traffic amount report and the traffic amount report that have been received.

In this way, in consideration of the traffic amount in the segment, the security policy is flexibly and appropriately determined for each segment, the security can be sufficiently protected. In other words, sufficient security tolerance can be efficiently obtained.

### <Fifth Embodiment>

### <Regarding Determination of Security Policy>

By the way, in the above, a single security management entity 73 has been provided for the entire healthcare IoT system, and the security management entity 73 has determined the security policy for each segment of each IoT device 72. In other words, the security management has been performed on the basis of central management by the security management entity 73.

However, in the healthcare IoT system, since the system is cumbersome and complicated, there is a use case where a portion that cannot be supported occurs when the entire security management is performed by the central control.

Specifically, for example, the use case is a case where a thermometer that is a sensor as an IoT device 72 exchanges data such as a measurement result of a body temperature of a client 71 (user) and the like with a smartphone as other IoT device 72, and a destination of the data is not determined until one month later although the smartphone accumulates the data from the thermometer. For example, such a use case may occur when the data is temporality accumulated in the smartphone and the like and a business operator to which analysis of data is requested is selected later. However, in such a case, a central-control security management entity for managing the security between the thermometer and the smartphone does not exist.

Therefore, a local security management entity is determined, and the local security management entity can manage the security between the IoT devices 72 that is a part of the healthcare IoT system. With this operation, the security can be more efficiently and sufficiently protected.

In this case, for example, if an IoT device 72 is included in the IoT devices 72 that can install software for security system management, the software is installed to the IoT device 72. With this operation, the IoT device 72 can function as the local security management entity (referred to as local security management entity below).

The IoT device 72, to which the software for security system management is installed, communicates and negotiates with the other IoT device 72 adjacent to the IoT device 72, and determines which IoT device 72 is made function as the local security management entity.

Then, after recognizing a state of the segment (communication path), presence or absence of an ID providing point and a conversion point, and a network topology for each IoT device 72 in a local network, the IoT device 72 to be the local security management entity determines a security policy in the local network.

Moreover, the local security management entity distributes the security policy determined for each IoT device 72 (particularly referred to as local security policy below), and each IoT device 72 operates according to the local security policy. Note that, in more detail, a local security policy configuration indicating the local security policy is distributed to each IoT device 72.

Thereafter, for example, it is assumed that the local security management entity be connected to the central security management entity 73 at a timing when the IoT device 72 in the local network transmits data to an IoT device 72 outside the local network one month later and the like.

In this case, the local security management entity reports to the security management entity 73 what kind of local security policy is distributed and operated in the local network to obtain data. The security management entity 73 determines the security policy at the time when the IoT device 72 in the local network exchanges data with the IoT device 72 outside the local network on the basis of the report from the local security management entity.

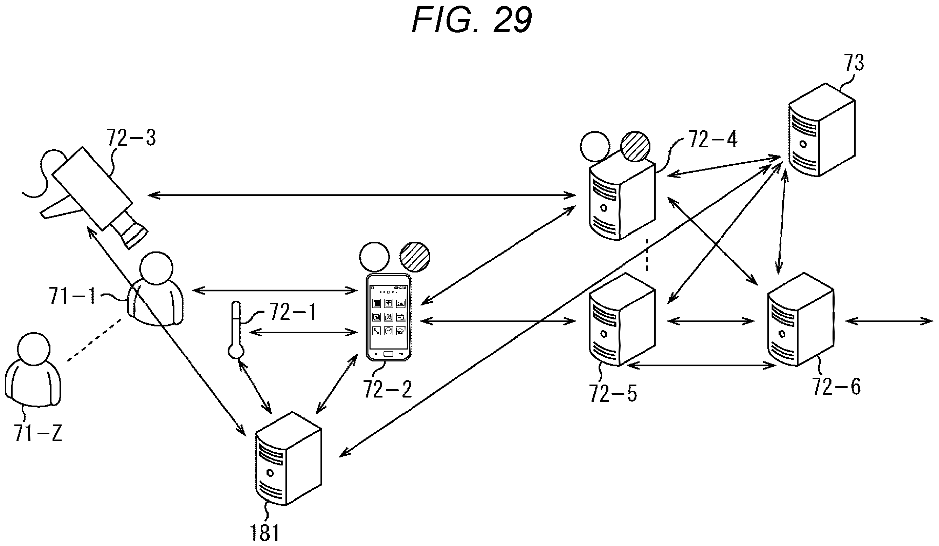

In such a case, the healthcare IoT system is configured, for example, as illustrated in Fig. 29. Note that a part in Fig. 29 corresponding to that in Fig. 11 is denoted with the same reference numeral, and description thereof will be appropriately omitted.

The healthcare IoT system illustrated in Fig. 29 includes clients 71, IoT devices 72, a security management entity 73, and a local security management entity 181. In other words, in the healthcare IoT system illustrated in Fig. 29, the local security management entity 181 is newly added to the healthcare IoT system illustrated in Fig. 11.

In this example, for example, the IoT devices 72-1 to 72-3 and the local security management entity 181 form a local network.

The local security management entity 181 functions as the IoT device 72, determines the local security policy for the IoT device 72 in the local network including the IoT device 72, and manages security of the local network.

Hereinafter, the local network to which the local security management entity 181 belongs is referred to as a local network, and the IoT device 72 belonging to the local network is referred to as a local IoT device 72.

Furthermore, the security management entity 73 manages security of a larger network including the local network configured of the local security management entity 181 and the like.

Moreover, the local security management entity 181 transmits a distribution state, an operation state, and the like of the local security policy to the security management entity 73 as a local security management report at a predetermined timing. The local security management report is information indicating a security management state in the local network.

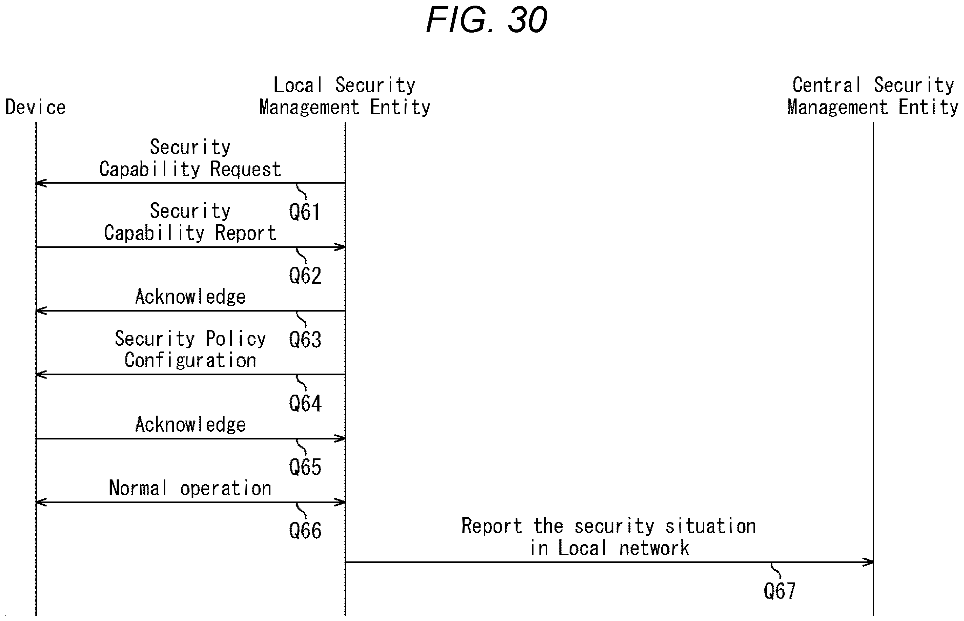

In such a case, for example, as illustrated in Fig. 30, the local security management entity 181 distributes the local security policy as in a case of the security management entity 73 described with reference to Fig. 12.

In other words, the local security management entity 181 transmits a security capability request to the local IoT device 72 as indicated by an arrow Q61.

Then, when receiving the security capability request, the local IoT device 72 transmits the security capability report to the local security management entity 181 in response to the security capability request as indicated by an arrow Q62.

Furthermore, when receiving the security capability report, the local security management entity 181 transmits Acknowledge indicating the reception of the security capability report to the local IoT device 72 as indicated by an arrow Q63.

Thereafter, the local security management entity 181 determines the local security policy on the basis of the security capability report and transmits a local security policy configuration indicating the determination result as indicated by an arrow Q64.

Furthermore, the local IoT device 72 transmits Acknowledge indicating the reception of the local security policy configuration to the local security management entity 181 as indicated by an arrow Q65.

Then, the local IoT device 72 and the local security management entity 181 exchange data according to the local security policy as indicated by an arrow Q66. Furthermore, the local IoT device 72 and the other local IoT device 72 exchange data according to the local security policy.

While exchanging data, for example, the local security management entity 181 appropriately analyzes the data received from the local IoT device 72 and accumulates data obtained by the analysis and the like (referred to as accumulated data below).

Then, at a timing, for example, one month later, or the like, the local security management entity 181 transmits the local security management report to the security management entity 73 as indicated by an arrow Q67.

Furthermore, the local security management entity 181 transmits the accumulated data to the IoT device 72 outside the local network according the security policy determined by the security management entity 73.

### <Exemplary Configuration of Local Security Management Entity>

Next, an exemplary configuration of the local security management entity 181 illustrated in Fig. 29 will be described.

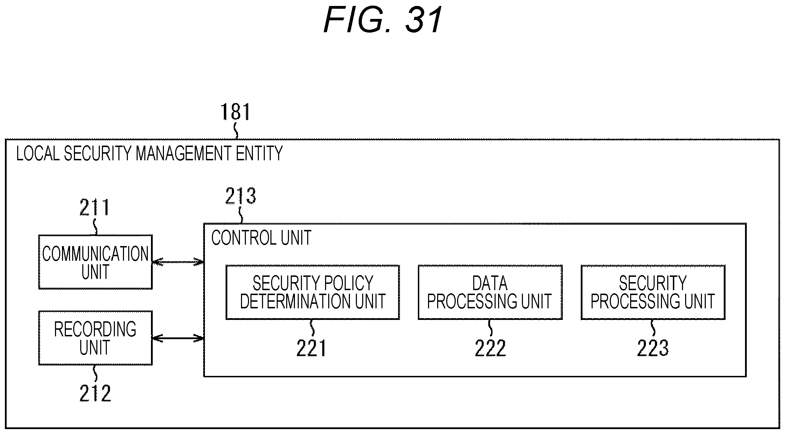

For example, the local security management entity 181 is configured as illustrated in Fig. 31.

The local security management entity 181 includes a communication unit 211, a recording unit 212, and a control unit 213.

The communication unit 211 communicates with the IoT device 72 and the security management entity 73 via the network, receives transmitted various data (information) and supplies the data to the control unit 213, and transmits the data supplied from the control unit 213. The recording unit 212 records the data supplied from the control unit 213 and supplies the recorded data to the control unit 213.

The control unit 213 controls an operation of the entire local security management entity 181. The control unit 213 includes a security policy determination unit 221, a data processing unit 222, and a security processing unit 223.

The security policy determination unit 221 determines a local security policy for each segment of the local IoT device 72 in the local network including the local IoT device 72. Furthermore, the data processing unit 222 and the security processing unit 223 respectively correspond to the data processing unit 111 and the security processing unit 112 of the IoT device 72 and perform operations similar to those of the data processing unit 111 and the security processing unit 112.

### <Description of Operation of Healthcare IoT System>

Next, operations of the local security management entity 181, the local IoT device 72, and the security management entity 73 will be described.

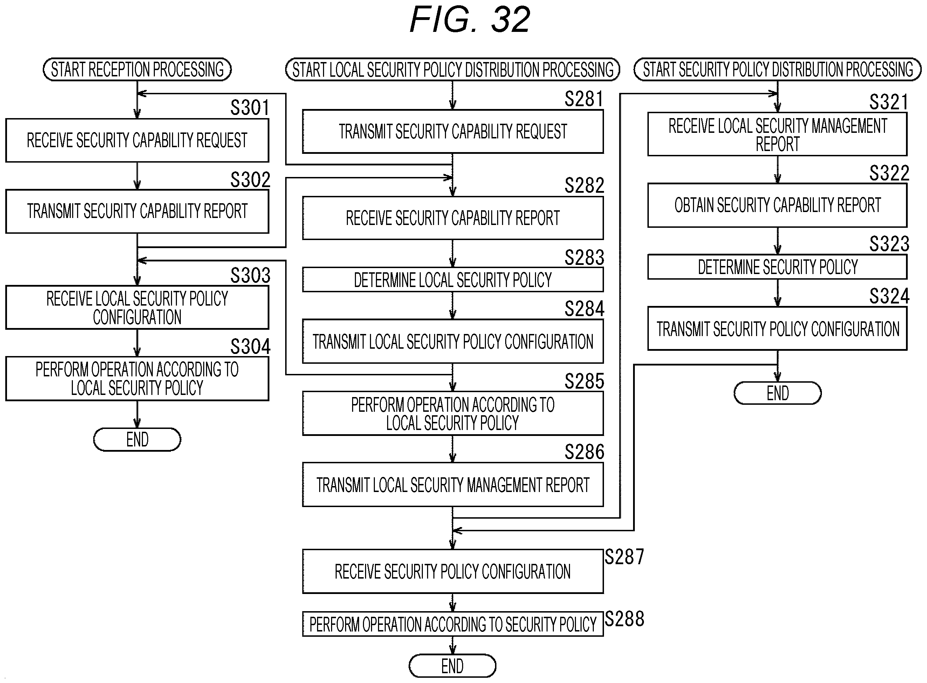

In other words, hereinafter, with reference to the flowchart in Fig. 32, local security policy distribution processing by the local security management entity 181, reception processing by the local IoT device 72, and security policy distribution processing by the security management entity 73 will be described.

When the local security policy distribution processing is started, processing in steps S281 to S283 is performed by the local security management entity 181, and processing in steps S301 and S302 is performed by the local IoT device 72.

Note that, the processing in steps S281 to S283 is similar to the processing in steps S11 to S13 in Fig. 18, and the processing in steps S301 and S302 is similar to the processing in steps S21 and S22 in Fig. 18. Therefore, description thereof will be appropriately omitted.

Here, in step S281, the communication unit 211 transmits the security capability request to the local IoT device 72, and the security capability report transmitted in response to this request is received by the communication unit 211 in step S282.

Then, in step S283, the security policy determination unit 221 determines a local security policy on the basis of the received security capability report of the local IoT device 72. The security policy determination unit 221 generates a local security policy configuration indicating the determined local security policy and supplies the local security policy configuration to the communication unit 211.

In step S284, the communication unit 211 transmits the local security policy configuration supplied from the security policy determination unit 221 to the local IoT device 72.

Then, in step S303, the communication unit 101 of the local IoT device 72 receives the local security policy configuration transmitted from the local security management entity 181 and supplies the received local security policy configuration to the control unit 103.

Then, in step S304, the control unit 103 performs an operation according to a local security policy indicated by the local security policy configuration received in step S303, and the reception processing is terminated. Note that, in step S304, the processing as in step S24 in Fig. 18 is performed, and the local security management entity 181 and the other local IoT device 72 exchange data.

Furthermore, in step S285, in the local security management entity 181, the control unit 213 performs the operation according to the local security policy determined in step S283. In step S285, for example, the processing as in step S304 is performed, and data is exchanged with the local IoT device 72.

Note that, here, it is assumed that the accumulated data be obtained as the result of the processing in step S285, and it is assumed that the accumulated data be transmitted to the IoT device 72 outside the local network (referred to as external IoT device 72 below) at a predetermined timing.

Moreover, for example, when the accumulated data is transmitted to the external IoT device 72 after a predetermined period, or the like, it is assumed that a timing comes when the local security management entity 181 and the local IoT device 72 in the local network exchange data with the IoT device 72 outside the local network.

In this case, the control unit 213 generates a local security management report on the basis of, for example, the local security policy of each local IoT device 72 determined in step S283 and the local security management entity 181 and supplies the report to the communication unit 211.

In step S286, the communication unit 211 transmits the local security management report supplied from the control unit 213 to the security management entity 73.

Then, in step S321, the communication unit 141 of the security management entity 73 receives the local security management report transmitted from the local security management entity 181 and supplies the report to the control unit 143.

In step S322, the control unit 143 obtains a security capability report from the external IoT device 72 outside the local network. In other words, in step S322, processing similar to the processing in steps S11 and S12 in Fig. 18 is performed, and the security capability report is obtained. At this time, the security capability report may be obtained from the local security management entity 181 and the local IoT device 72 in the local network as necessary.

In step S323, the security policy determination unit 151 determines a security policy on the basis of the local security management report received in step S321 and the security capability report obtained in step S322. Here, for example, the security policy is determined for each segment of the external IoT device 72 and the local security management entity 181.

Then, the security policy determination unit 151 generates the security policy configuration indicating the determined security policy and supplies the security policy configuration to the communication unit 141.

In step S324, the communication unit 141 transmits the security policy configuration supplied from the security policy determination unit 151 to the local security management entity 181, and the security policy distribution processing is terminated. Note that, in step S324, the security policy configuration is transmitted to the external IoT device 72 and the like.

In step S287, the communication unit 211 of the local security management entity 181 receives the security policy configuration transmitted from the security management entity 73 and supplies the security policy configuration to the control unit 213.

Then, in step S288, the control unit 213 performs an operation according to the security policy indicated by the security policy configuration supplied from the communication unit 211, and the local security policy distribution processing is terminated. For example, in step S288, the accumulated data is exchanged between the local security management entity 181 and the external IoT device 72 according to the security policy.

As described above, the local IoT device 72 and the local security management entity 181 operate according to the local security policy, and thereafter, the local security management entity 181 transmits the local security management report to the security management entity 73.

With this operation, it is possible to perform security management in local network unit as necessary and flexibly and appropriately perform sufficient security protection. In other words, sufficient security tolerance can be efficiently obtained.

### <Sixth Embodiment>

### <Regarding Determination of Security Policy>

Note that, in the first to fourth embodiments, in a case where the security management entity 73 performs central-control security management, it has been assumed that the healthcare service provider for providing a service be a single business operator.

However, for example, when data obtained by a single temperature sensor as an IoT device 72 is data to be concurrently provided to a plurality of healthcare service providers, there is a case where a plurality of security management entities performing the central-control security management exists.

However, in such a case, when a security policy configuration is supplied from each of the plurality of security management entities to the temperature sensor, the temperature sensor does not know which security policy to follow.

For example, when it is simply assumed that multiple systems that are completely different from each other exist, when the temperature sensor transmits data according to the security policy of each security management entity, completely the same data is transmitted the number of times as many as the security management entities. Then, from the viewpoint of the security, opportunities for leakage and falsification increase by the increase in the number of times of data transmissions, and security tolerance is deteriorated.

Therefore, by determining a unified security policy after coordinating the plurality of security management entities, it is possible to prevent overlapped data transmission and reduce the opportunities for leakage and falsification.

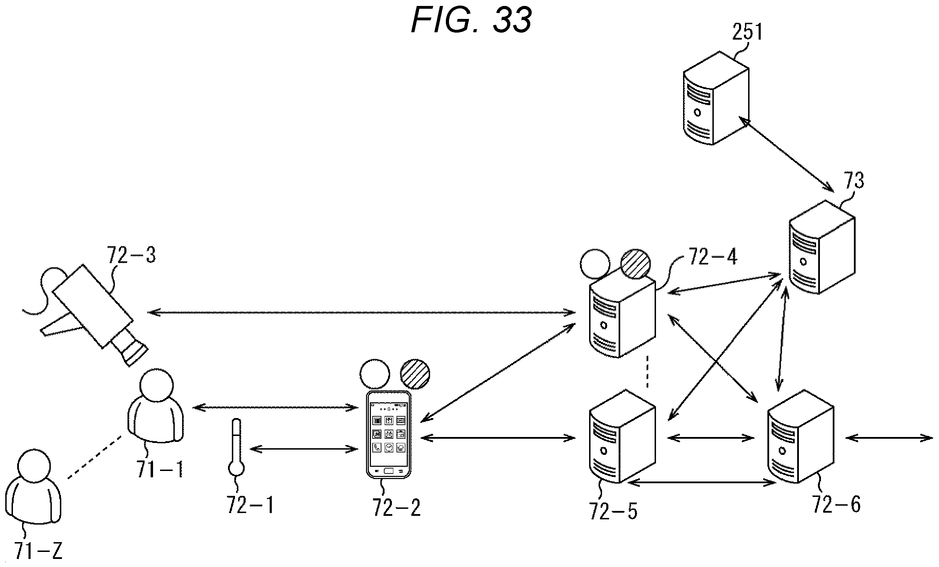

In such a case, the healthcare IoT system is configured, for example, as illustrated in Fig. 33. Note that a part in Fig. 33 corresponding to that in Fig. 11 is denoted with the same reference numeral, and description thereof will be appropriately omitted.

The healthcare IoT system illustrated in Fig. 33 includes clients 71, IoT devices 72, a security management entity 73, and a security management entity 251. In other words, in the healthcare IoT system illustrated in Fig. 33, the security management entity 251 is newly added to the healthcare IoT system illustrated in Fig. 11.

Here, the security management entity 251 is managed by a healthcare service provider different from the healthcare service provider for managing the security management entity 73.

The security management entity 251 performs processing similar to the security management entity 73.

Furthermore, it is assumed that some IoT devices 72 belong to not only a network managed by the security management entity 251 but also a network managed by the security management entity 73.

Hereinafter, for example, it is assumed that data to be transmitted to an IoT device 72-2 to an IoT device 72-4 be used for the service provided by the healthcare service provider for managing the security management entity 251 and used for the service provided by the healthcare service provider managed by the security management entity 73.

In other words, a segment between the IoT devices 72-2 and 72-4 is a segment portion that is common in the network managed by the security management entity 251 and the network managed by the security management entity 73. Hereinafter, the segment that is used in the plurality of networks in common is referred to as a common segment. Furthermore, the IoT device connected to the common segment such as the IoT devices 72-2 and 72-4 in this example, that is, the IoT device 72 positioned at the end of the common segment, is referred to as a common IoT device 72. In this example, the common IoT device 72 is managed by the security management entity 251 and the security management entity 73.

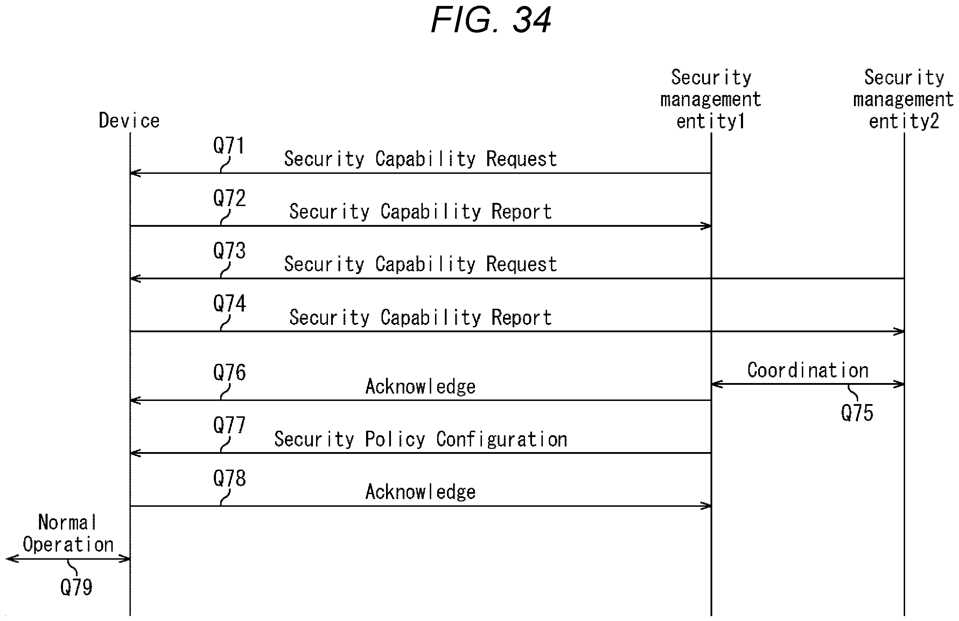

In such a case, for example, as illustrated in Fig. 34, a security policy of the common segment is determined.

In other words, first, a security capability request is transmitted from the security management entity 73 to the common IoT device 72 as indicated by an arrow Q71, and the security capability report is transmitted from the common IoT device 72 to the security management entity 73 as indicated by an arrow Q72 in response to the request.

Then, the security management entity 73 determines a security policy of each segment of the common IoT device 72 on the basis of the received security capability report. Note that, here, it is assumed that the common IoT device 72 be the IoT device 72-2 and the segment to be connected to the IoT device 72-2 be only a common segment between the IoT device 72-2 and the IoT device 72-4.

Furthermore, as the security management entity 73, the security management entity 251 determines a security policy of the common segment of the common IoT device 72.

In other words, the security management entity 251 transmits the security capability request to the common IoT device 72 as indicated by an arrow Q73 and receives a security capability report from the common IoT device 72 as indicated by an arrow Q74. Then, the security management entity 251 determines the security policy of the common segment of the common IoT device 72 on the basis of the received security capability report.

Thereafter, the security management entity 73 and the security management entity 251 communicate with each other to perform coordination as indicated by an arrow Q75, and a final, that is, a single unified security policy is determined for the common segment of the common IoT device 72.

Specifically, for example, a security policy, which has stronger security tolerance, that is one of the security policy determined by the security management entity 73 or the security policy determined by the security management entity 251 is selected as the final security policy.

In addition, for example, a security policy in which all the processing for security protection indicated by the security policy determined by the security management entity 73 and the processing for security protection indicated by the security policy determined by the security management entity 251 are performed may be set to the final security policy.

The final security policy determined in this way is used for the security management by the security management entity 73 and the security management by the security management entity 251 in common. Hereinafter, the final security policy determined by such coordination is referred to as a common security policy.

When the common security policy is determined, the security management entity 73 transmits Acknowledge indicating the reception of the security capability report to the common IoT device 72 as indicated by an arrow Q76.

Thereafter, the security management entity 73 transmits a security policy configuration indicating the common security policy to the common IoT device 72 as indicated by an arrow Q77. Furthermore, in response to this, Acknowledge indicating the reception of the security policy configuration is transmitted from the common IoT device 72 to the security management entity 73 as indicated by an arrow Q78.

Then, the common IoT device 72 exchanges data with the other common IoT device 72 according to the common security policy indicated by the security policy configuration received from the security management entity 73 as indicated by an arrow Q79. In this case, for example, the data is exchanged between the IoT devices 72-2 and 72-4.

By using the common security policy in this way, the data exchange between the IoT devices 72-2 and 72-4 can be reduced. In other words, it is not necessary to exchange the data according to each of the plurality of security policies, and it is sufficient to exchange the data once according to the single common security policy.

Note that, here, an example will be described in which a security capability is used to determine the security policy. However, in addition, a segment security state, a traffic amount, and the like may be used, and a combination of the security capability, the segment security state, and the traffic amount may be used.

### <Description of Distribution Processing>

Here, processing performed by the security management entity 73 and the common IoT device 72 in a case where the common security policy is determined by coordination by the security management entity 73 will be described.

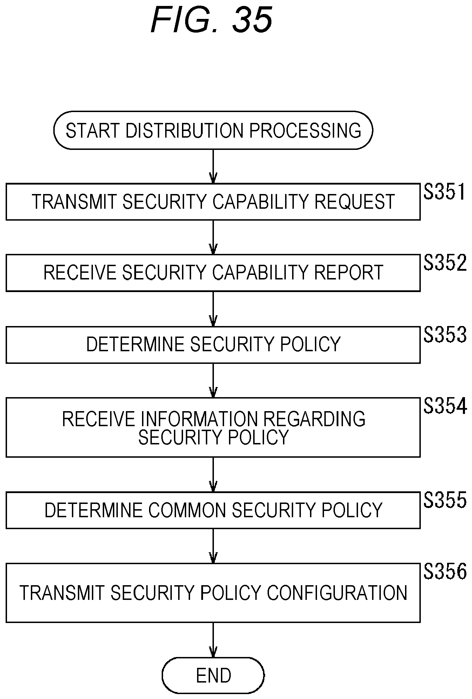

First, with reference to the flowchart in Fig. 35, distribution processing performed by the security management entity 73 will be described. Note that, since processing in steps S351 to S353 is similar to the processing in steps S11 to S13 in Fig. 18, description thereof will be omitted. When step S353 is performed, the security policy is determined for the common segment of the common IoT device 72.

In step S354, the communication unit 141 receives information regarding the security policy transmitted from the security management entity 251 and supplies the received information to the control unit 143.

Here, for example, as the information regarding the security policy, information indicating the security policy of the common segment of the common IoT device 72 determined by the security management entity 251 is received. Note that, in step S354, for performing coordination, the information regarding the security policy of the common segment of the common IoT device 72 determined by the security management entity 73 may be transmitted to the security management entity 251.

In step S355, the security policy determination unit 151 determines the common security policy on the basis of the security policy determined in step S353 and the information regarding the security policy received in step S354. In other words, the common security policy is determined on the basis of the determination result of the security policy obtained by different devices.

Between the security management entity 73 and the security management entity 251, the processing in steps S354 and S355 is performed as the coordination. More specifically, when the common security policy is determined, Acknowledge is transmitted, for example, as indicated by the arrow Q76 in Fig. 34.

Furthermore, the security policy determination unit 151 generates the security policy configuration indicating the determined common security policy and supplies the common security policy configuration to the communication unit 141.

In step S356, the communication unit 141 transmits the security policy configuration supplied from the security policy determination unit 151 to the common IoT device 72, and the distribution processing is terminated.

As described above, the security management entity 73 performs the coordination with the security management entity 251 and determines the common security policy. With this operation, it is possible to prevent redundant exchange of the same data, and it is possible to efficiently obtain sufficient security tolerance.

### <Description of Reception Processing>

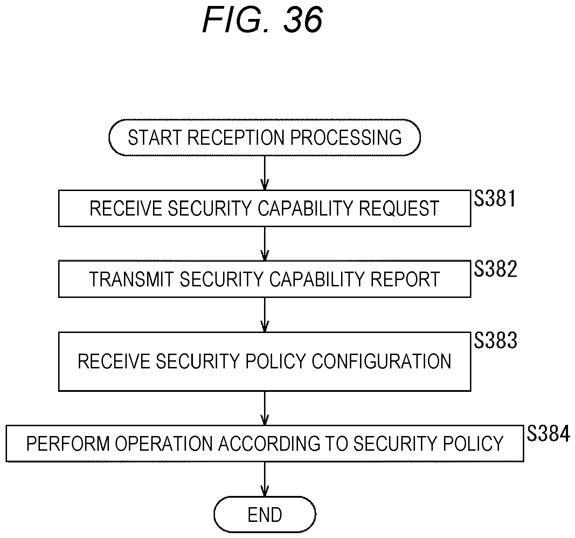

Next, processing performed by the common IoT device 72 when the distribution processing described with reference to Fig. 35 is performed will be described. In other words, hereinafter, reception processing by the common IoT device 72 will be described with reference to the flowchart in Fig. 36.

When the reception processing is started, processing in steps S381 and S382 is performed to receive the security capability request and transmit the security capability report.

Note that, since the processing in steps S381 and S382 is similar to the processing in steps S21 and S22 in Fig. 18, description thereof will be omitted.

However, in this example, for each of the security management entity 73 and the security management entity 251, the processing in steps S381 and S382 is performed. For example, for the security management entity 73, the processing in step S381 is performed according to the processing in step S351 in Fig. 35, and the processing in step S352 in Fig. 35 is performed according to the processing in step S382.

In step S383, the communication unit 101 receives the security policy configuration indicating the common security policy transmitted from the security management entity 73 by the processing in step S356 in Fig. 35 and supplies the security policy configuration to the control unit 103.

When the security policy configuration is received, thereafter, the processing in step S384 is performed, and the reception processing is terminated. However, the processing in step S384 is similar to the processing in step S24 in Fig. 18, description thereof will be omitted.

For example, in step S384, data used for a plurality of different services in common is exchanged between the common IoT device 72 and the other common IoT device 72 by an operation according to the common security policy via the common segment.

As described above, the common IoT device 72 receives the security policy configuration indicating the common security policy and performs the operation according to the common security policy. With this operation, it is possible to prevent redundant exchange of the same data and efficiently obtain sufficient security tolerance.

### <First Modification of Sixth Embodiment>

### <Regarding Determination of Security Policy>

Note that, in the sixth embodiment, an example has been described in which the coordination is performed between the security management entity 73 and the security management entity 251 to determine the common security policy. However, the present technology is not limited to this, and the common security policy may be determined by the side of the common IoT device 72.

In such a case, the common IoT device 72 receives the security policy configurations from the security management entity 73 and the security management entity 251 and sets one of the security policies indicated by the security policy configurations as a common security policy.

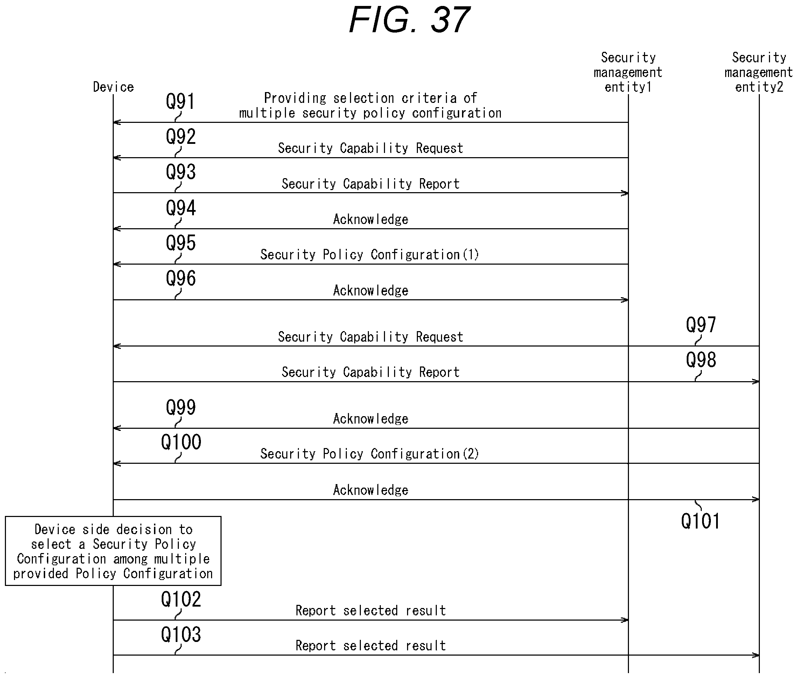

Specifically, for example, the security management entity 73 transmits selection criteria information indicating a selection criteria of the security policy to the common IoT device 72 as indicated by an arrow Q91 in Fig. 37.

Here, the selection criteria information is information indicating which security policy is selected as the common security policy from among the plurality of security policies. Specifically, for example, the selection criteria information is information indicating priority of the security policy indicated by each Configuration ID described with reference to Fig. 14, that is, list information of the priority of the security policy indicated by each Configuration ID, or the like.

In this case, for example, priority of a security policy with higher security tolerance is set to be higher, and a security policy with the highest priority is selected as the common security policy from among the plurality of security policies.

Such selection criteria information is distributed to all the common IoT devices 72. Note that the selection criteria information may be recorded in the common IoT device 72 in advance.

When the selection criteria information is distributed, thereafter, the security capability request is transmitted from the security management entity 73 to the common IoT device 72 as indicated by an arrow Q92, and in response to this, the security capability report is transmitted from the common IoT device 72 to the security management entity 73 as indicated by an arrow Q93.

Then, as indicated by an arrow Q94, Acknowledge indicating the reception of the security capability report is transmitted from the security management entity 73 to the common IoT device 72.

Thereafter, the security management entity 73 transmits the security policy configuration to the common IoT device 72 as indicated by an arrow Q95 and receives Acknowledge from the common IoT device 72 as indicated by an arrow Q96 in response to the security policy configuration.

Furthermore, similarly to the security management entity 73, the security management entity 251 transmits the security policy configuration.

In other words, the security management entity 251 transmits the security capability request to the common IoT device 72 as indicated by an arrow Q97 and receives the security capability report from the common IoT device 72 as indicated by an arrow Q98.

Then, the security management entity 251 transmits Acknowledge to the common IoT device 72 as indicated by an arrow Q99 and transmits the security policy configuration to the common IoT device 72 as indicated by an arrow Q100. In addition, the security management entity 251 receives Acknowledge from the common IoT device 72 as indicated by an arrow Q101.

With this operation, the common IoT device 72 has received the security policy configurations from the plurality of different devices including the security management entity 73 and the security management entity 251 for the single common segment.

The common IoT device 72 selects one of the security policies indicated by the security policy configurations as the common security policy on the basis of the selection criteria information.

Then, the common IoT device 72 reports the selection result of the common security policy to the security management entity 73 as indicated by an arrow Q102 and reports the selection result of the common security policy to the security management entity 251 as indicated by an arrow Q103. With these reports, the security management entity 73 and the security management entity 251 can recognize which security policy has been set as the common security policy.

The common IoT device 72 exchanges data with the other common IoT device 72 according to the common security policy selected in this way.

Note that, here, an example has been described in which the common IoT device 72 selects one of the plurality of security policies as the common security policy on the basis of the selection criteria information. However, the common IoT device 72 may determine the common security policy on the basis of the selection criteria information, for example, a case where a security policy in which all the processing for security protection indicated by the plurality of security policies is performed is set as the common security policy.

Furthermore, the security policy may be determined in consideration of not only the security capability report but also the segment security state and the traffic amount in this embodiment.

### <Description of Distribution Processing>

Here, processing performed by the security management entity 73 and the common IoT device 72 in a case where the common IoT device 72 determines (select) the common security policy will be described.

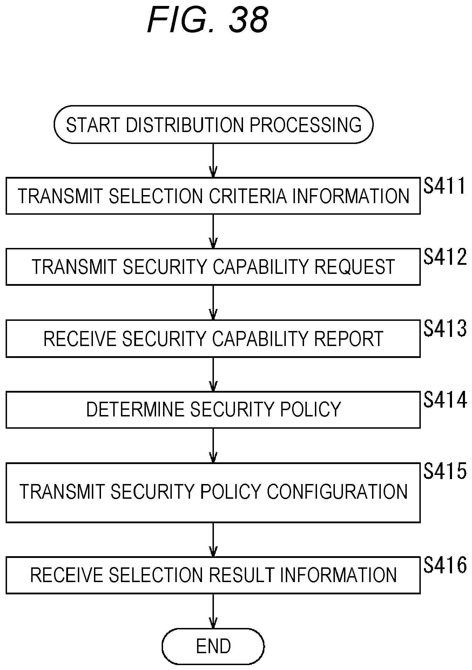

First, with reference to the flowchart in Fig. 38, distribution processing performed by the security management entity 73 will be described.

In step S411, the communication unit 141 transmits the selection criteria information to the common IoT device 72.

In other words, for example, the control unit 143 reads the selection criteria information which has been prepared in advance from the recording unit 142 and supplies the selection criteria information to the communication unit 141. Then, the communication unit 141 transmits the selection criteria information supplied from the control unit 143 to the common IoT device 72.

When the processing in step S411 is performed, thereafter, processing in steps S412 to S415 is performed, and the security policy configuration is transmitted to the common IoT device 72. Note that since the processing in steps S412 to S415 is similar to the processing in steps S11 to S14 in Fig. 18, description thereof will be omitted.

When the security policy configuration is transmitted to the common IoT device 72, thereafter, selection result information indicating the selection result of the common security policy is transmitted from the common IoT device 72 to the security management entity 73.

In step S416, the communication unit 141 receives the selection result information of the common security policy transmitted from the common IoT device 72 and supplies the selection result information to the control unit 143, and the distribution processing is terminated. With this operation, the control unit 143 can recognize which security policy has been selected as the common security policy for the common segment.

As described above, the security management entity 73 transmits the selection criteria information and the security policy configuration to the common IoT device 72. With this transmission, the common IoT device 72 can select an appropriate common security policy, and it is possible to efficiently obtain the sufficient security tolerance.

### <Description of Reception Processing>

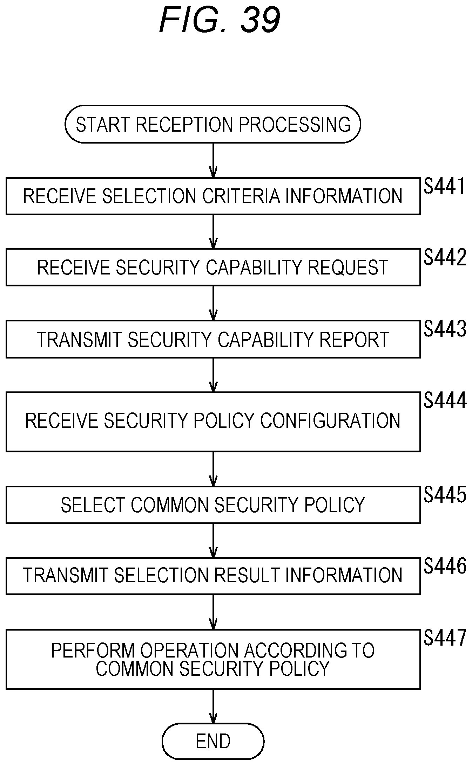

Next, processing performed by the common IoT device 72 when the distribution processing described with reference to Fig. 38 is performed will be described. In other words, hereinafter, reception processing by the common IoT device 72 will be described with reference to the flowchart in Fig. 39.

In step S441, the communication unit 101 receives the selection criteria information transmitted from the security management entity 73 and supplies the selection criteria information to the control unit 103.

When the selection criteria information is received, thereafter, processing in steps S442 to S444 is performed, and the security policy configuration is received.

Note that since the processing in steps S442 to S444 is similar to the processing in steps S21 to S23 in Fig. 18, description thereof will be omitted.

However, in this example, for each of the security management entity 73 and the security management entity 251, the processing in steps S442 to S444 is performed. For example, for the security management entity 73, the processing in step S442 is performed according to the processing in step S412 in Fig. 38, and the processing in step S413 in Fig. 38 is performed according to the processing in step S443. Furthermore, for example, the processing in step S444 is performed according to the processing in step S415 in Fig. 38.

In step S445, the control unit 103 selects a single security policy from among the security policies indicated by the plurality of security policy configurations received in the processing in step S444 on the basis of the selection criteria information received in step S441 and sets the selected security policy as the common security policy.

Furthermore, the control unit 103 generates the selection result information indicating the selection result of the common security policy and supplies the selection result information to the communication unit 101.

In step S446, the communication unit 101 transmits the selection result information supplied from the control unit 103 to the security management entity 73 and the security management entity 251. With this transmission, for example, the processing in step S416 in Fig. 38 is performed.

In step S447, the control unit 103 performs an operation according to the common security policy selected in step S445, and the reception processing is terminated. Note that, in step S447, the processing similar to the processing in step S384 in Fig. 36 is performed.

As described above, the common IoT device 72 receives the selection criteria information and the plurality of security policy configurations, selects (determine) the common security policy, and performs the operation according to the selected common security policy. In this way, it is possible to select an appropriate common security policy to prevent redundant exchange of the same data and to efficiently obtain the sufficient security tolerance.

Note that the embodiments described above may be appropriately combined.

### <Exemplary Configuration of Computer>

By the way, the above-mentioned series of processing can be performed by hardware and software. In a case where the series of the processing is performed by the software, a program included in the software is installed in a computer. Here, the computer includes a computer incorporated in dedicated hardware and, for example, a general computer or the like which can perform various functions by installing various programs.

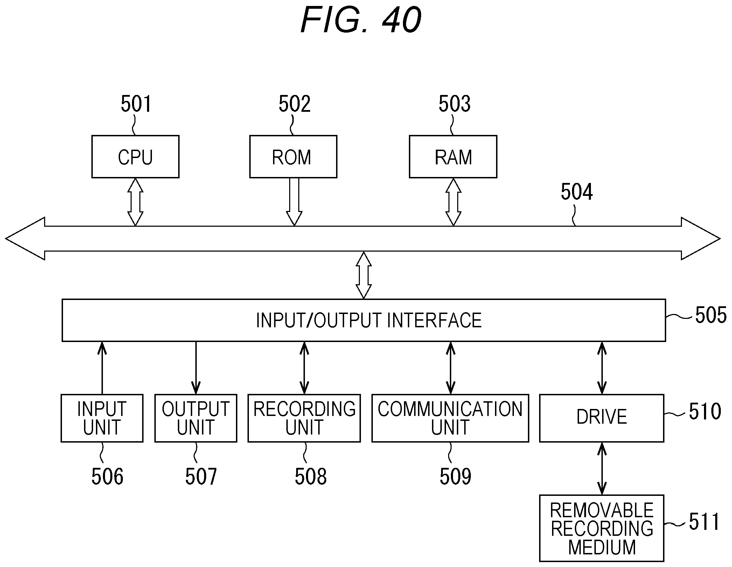

Fig. 40 is a block diagram illustrating an exemplary configuration of hardware of the computer for executing the above-mentioned series of processing by the program.

In a computer, a Central Processing Unit (CPU) 501, a Read Only Memory (ROM) 502, a Random Access Memory (RAM) 503 are connected to each other with a bus 504.

In addition, an input/output interface 505 is connected to the bus 504. An input unit 506, an output unit 507, a recording unit 508, a communication unit 509, and a drive 510 are connected to the input/output interface 505.

The input unit 506 includes a keyboard, a mouse, a microphone, an imaging element, and the like. The output unit 507 includes a display, a speaker, and the like. The recording unit 508 includes a hard disk, a nonvolatile memory, and the like. The communication unit 509 includes a network interface and the like. The drive 510 drives a removable recording medium 511 such as a magnetic disk, an optical disk, an optical magnetic disk, or a semiconductor memory.

In the computer configured as described above, for example, the CPU 501 loads a program recorded in the recording unit 508 to the RAM 503 via the input/output interface 505 and the bus 504 and executes the program so that the above-mentioned series of processing is performed.

The program executed by the computer (CPU 501) can be provided, for example, by recording it to the removable recording medium 511 as a package medium and the like. Furthermore, the program can be provided via a wired or wireless transmission media such as a local area network, the Internet, and digital satellite broadcasting.

In the computer, the program can be installed to the recording unit 508 via the input/output interface 505 by mounting the removable recording medium 511 in the drive 510. Furthermore, the program can be received by the communication unit 509 via the wired or wireless transmission medium and installed to the recording unit 508. In addition, the program can be previously installed to the ROM 502 and the recording unit 508.

Note that, the program performed by the computer may be a program in which processing is performed along the order described herein in a time series manner and a program in which the processing is performed in parallel or at a necessary timing, for example, when a call has been performed.

Furthermore, the embodiment of the present technology is not limited to the above-mentioned embodiments, and various changes can be made without departing from the scope of the present technology.

For example, the present technology may have a configuration of cloud computing in which a single function is separately performed by a plurality of devices via a network in cooperation.

Furthermore, each step described with reference to the above-mentioned flowchart can be performed by the single device and can be divided and performed by the plurality of devices.

Moreover, in a case where a plurality of processing is included in one step, the plurality of kinds of processing included in one step can be performed by the single device and can be divided and performed by the plurality of devices.

Furthermore, the effects described herein are only exemplary and not limited to these. Furthermore, there may be an additional effect.

Moreover, the present technology can have the following configurations.
(1) An information processing device including:
   a communication unit configured to transmit information regarding security of the information processing device and receive designation information indicating processing to be performed for security protection, transmitted in response to the transmission of the information regarding the security; and
   a control unit configured to perform the processing for security protection on the basis of the designation information in a case where the control unit transmits data to a predetermined device or in a case where the control unit receives data transmitted from the device.
(2) The information processing device according to (1), in which
   the information regarding the security includes information indicating the processing for security protection that is executable by the information processing device.
(3) The information processing device according to (1) or (2), in which
   the processing for security protection includes ciphering, integrity check, or authentication.
(4) The information processing device according to any one of (1) to (3), in which
   the information regarding the security includes information indicating processing that is executable on data by the information processing device.
(5) The information processing device according to (4), in which
   the processing executable on the data by the information processing device is addition of personal identification information to data or conversion processing on data.
(6) The information processing device according to any one of (1) to (5), in which
   the information regarding the security includes information indicating a state of a segment between the information processing device and the device regarding security.
(7) The information processing device according to any one of (1) to (6), in which
   in a case of receiving a transmission request of the information regarding the security, the communication unit transmits the transmission request to the device and transmits the information regarding security of the information processing device in response to the transmission request.
(8) The information processing device according to (7), in which
   in a case where the device has not responded to the transmission request, the communication unit transmits information indicating that the device that does not have a reporting capability of the information regarding the security exists.
(9) The information processing device according to (8), in which
   when the communication unit has received a connection rejection request for requesting for rejecting to be connected to the device that does not have the reporting capability, the control unit performs control so as not to exchange data with the device that does not have the reporting capability.
(10) The information processing device according to (7) or (8), in which
   in a case where the device has not responded to the transmission request, and when the information regarding the security of the device has been specified by the exchange of the data with the device, the communication unit transmits the specified information regarding the security of the device.
(11) The information processing device according to any one of (1) to (10), in which
   the information regarding the security includes information regarding a traffic amount of data in the segment between the information processing device and the device.
(12) The information processing device according to any one of (1) to (11), in which
   in a case of receiving the designation information from a plurality of devices different from each other regarding the segment between the information processing device and the device, the control unit selects one piece of the designation information from among the received plurality of pieces of designation information and performs the processing for security protection on the basis of the selected piece of the designation information.
(13) The information processing device according to (12), in which
   the communication unit transmits information indicating a selection result of the designation information to the plurality of devices.
(14) The information processing device according to (12) or (13), in which
   the communication unit further receives selection criteria information indicating a selection criteria of the designation information, and
   the control unit selects the designation information on the basis of the selection criteria information.
(15) An information processing method of an information processing device, including steps of:
   transmitting information regarding security of the information processing device and receiving designation information indicating processing to be performed for security protection transmitted in response to the transmission of the information regarding the security; and
   performing processing for security protection on the basis of the designation information in a case of transmitting data to a predetermined device or receiving data transmitted from the device.
(16) A program for causing a computer that controls an information processing device to perform processing including steps of:
   transmitting information regarding security of the information processing device and receiving designation information indicating processing to be performed for security protection transmitted in response to the transmission of the information regarding the security; and
   performing processing for security protection on the basis of the designation information in a case of transmitting data to a predetermined device or receiving data transmitted from the device.
(17) An information processing device including:
   a communication unit configured to receive information regarding security of a predetermined device and transmit designation information indicating processing to be performed for security protection by the device; and
   a control unit configured to generate the designation information on the basis of the information regarding the security.
(18) The information processing device according to (17), in which
   the information regarding the security includes information indicating processing for security protection executable by the device.
(19) The information processing device according to (17) or (18), in which
   the processing for security protection includes ciphering, integrity check, or authentication.
(20) The information processing device according to any one of (17) to (19), in which
   the information regarding the security includes information indicating processing that is executable on data by the device.
(21) The information processing device according to (20), in which
   the processing executable on data by the device is addition of personal identification information to data or conversion processing on data.
(22) The information processing device according to any one of (17) to (21), in which
   the information regarding the security includes information indicating a state of a segment between the device and other device regarding security.
(23) The information processing device according to any one of (17) to (22), in which
   in a case where the communication unit has received information indicating that other device that does not have a reporting capability of the information regarding the security exists from the device, the control unit generates the designation information on the basis of the information regarding the security and the information indicating that the other device that does not have the reporting capability exists.
(24) The information processing device according to (23), in which
   in a case where the information regarding the security of the other device specified by the device is received by the communication unit after receiving the information indicating that the other device that does not have the reporting capability exists, the control unit generates the designation information of a device, different from the device, connected to the other device on the basis of the information regarding the security of the other device.
(25) The information processing device according to (23), in which
   the communication unit transmits a connection rejection request for requesting for rejecting to be connected to the other device that does not have the reporting capability to the device.
(26) The information processing device according to any one of (17) to (25), in which
   the information regarding the security includes information regarding a traffic amount of data in the segment between the device and the other device.
(27) The information processing device according to any one of (17) to (26), in which
   the communication unit transmits the designation information to the device configuring a local network and transmits information indicating a security management state in the local network to a device that performs security management of a network including the local network.
(28) The information processing device according to any one of (17) to (26), in which
   the control unit determines processing to be performed for security protection by the device on the basis of the information regarding the security for the segment between the device and the other device and generates the designation information on the basis of a determination result and a determination result by another information processing device different from the information processing device regarding the processing to be performed for security protection by the device.
(29) The information processing device according to any one of (17) to (26), in which
   the communication unit
   transmits selection criteria information indicating a selection criteria of the designation information to the device, and
   receives information indicating a single piece of the designation information selected from among the plurality of pieces of designation information received from the plurality of devices including the information processing device by the device from the device for the segment between the device and the other device.
(30) An information processing method including steps of:
   receiving information regarding security of a predetermined device;
   generating designation information indicating processing to be performed for security protection by the device on the basis of the information regarding the security; and
   transmitting the designation information.
(31) A program for causing a computer to perform processing including steps of:
   receiving information regarding security of a predetermined device;
   generating designation information indicating processing to be performed for security protection by the device on the basis of the information regarding the security; and
   transmitting the designation information.

### REFERENCE SIGNS LIST

- 72-1 to 72-6, 72: IoT device
- 73: Security management entity
- 101: Communication unit
- 103: Control unit
- 111: Data processing unit
- 112: Security processing unit
- 141: Communication unit
- 143: Control unit
- 151: Security policy determination unit
- 181: Local security management entity
- 211: Communication unit
- 213: Control unit
- 221: Security policy determination unit
- 222: Data processing unit
- 223: Security processing unit

## Claims

1. An information processing device comprising:
a communication unit configured to transmit information regarding security of the information processing device and receive designation information indicating processing to be performed for security protection, transmitted in response to the transmission of the information regarding the security; and
a control unit configured to perform the processing for security protection on a basis of the designation information in a case where the control unit transmits data to a predetermined device or in a case where the control unit receives data transmitted from the device.

2. The information processing device according to claim 1, wherein
the information regarding the security includes information indicating the processing for security protection that is executable by the information processing device.

3. The information processing device according to claim 1, wherein
the processing for security protection includes ciphering, integrity check, or authentication.

4. The information processing device according to claim 1, wherein
the information regarding the security includes information indicating processing that is executable on data by the information processing device.

5. The information processing device according to claim 4, wherein
the processing executable on the data by the information processing device is addition of personal identification information to data or conversion processing on data.

6. The information processing device according to claim 1, wherein
the information regarding the security includes information indicating a state of a segment between the information processing device and the device regarding security.

7. The information processing device according to claim 1, wherein
in a case of receiving a transmission request of the information regarding the security, the communication unit transmits the transmission request to the device and transmits the information regarding the security of the information processing device in response to the transmission request.

8. The information processing device according to claim 7, wherein
in a case where the device has not responded to the transmission request, the communication unit transmits information indicating that the device that does not have a reporting capability of the information regarding the security exists.

9. The information processing device according to claim 8, wherein
when the communication unit has received a connection rejection request for requesting for rejecting to be connected to the device that does not have the reporting capability, the control unit performs control so as not to exchange data with the device that does not have the reporting capability.

10. The information processing device according to claim 7, wherein
in a case where the device has not responded to the transmission request, and when the information regarding the security of the device has been specified by the exchange of the data with the device, the communication unit transmits the specified information regarding the security of the device.

11. The information processing device according to claim 1, wherein
the information regarding the security includes information regarding a traffic amount of data in the segment between the information processing device and the device.

12. The information processing device according to claim 1, wherein
in a case of receiving the designation information from a plurality of devices different from each other regarding the segment between the information processing device and the device, the control unit selects one piece of the designation information from among the received plurality of pieces of designation information and performs the processing for security protection on a basis of the selected piece of the designation information.

13. The information processing device according to claim 12, wherein
the communication unit transmits information indicating a selection result of the designation information to the plurality of devices.

14. The information processing device according to claim 12, wherein
the communication unit further receives selection criteria information indicating a selection criteria of the designation information, and
the control unit selects the designation information on a basis of the selection criteria information.

15. An information processing method of an information processing device, comprising steps of:
transmitting information regarding security of the information processing device and receiving designation information indicating processing to be performed for security protection transmitted in response to the transmission of the information regarding the security; and
performing processing for security protection on a basis of the designation information in a case of transmitting data to a predetermined device or receiving data transmitted from the device.

16. A program for causing a computer that controls an information processing device to perform processing including steps of:
transmitting information regarding security of the information processing device and receiving designation information indicating processing to be performed for security protection transmitted in response to the transmission of the information regarding the security; and
performing processing for security protection on a basis of the designation information in a case of transmitting data to a predetermined device or receiving data transmitted from the device.

17. An information processing device comprising:
a communication unit configured to receive information regarding security of a predetermined device and transmit designation information indicating processing to be performed for security protection by the device; and
a control unit configured to generate the designation information on a basis of the information regarding the security.

18. The information processing device according to claim 17, wherein
the information regarding the security includes information indicating processing for security protection executable by the device.

19. The information processing device according to claim 17, wherein
the processing for security protection includes ciphering, integrity check, or authentication.

20. The information processing device according to claim 17, wherein
the information regarding the security includes information indicating processing that is executable on data by the device.

21. The information processing device according to claim 20, wherein
the processing executable on data by the device is addition of personal identification information to data or conversion processing on data.

22. The information processing device according to claim 17, wherein
the information regarding the security includes information indicating a state of a segment between the device and other device regarding security.

23. The information processing device according to claim 17, wherein
in a case where the communication unit has received information indicating that other device that does not have a reporting capability of the information regarding the security exists from the device, the control unit generates the designation information on a basis of the information regarding the security and the information indicating that the other device that does not have the reporting capability exists.

24. The information processing device according to claim 23, wherein
in a case where the information regarding the security of the other device specified by the device is received by the communication unit after receiving the information indicating that the other device that does not have the reporting capability exists, the control unit generates the designation information of a device, different from the device, connected to the other device on a basis of the information regarding the security of the other device.

25. The information processing device according to claim 23, wherein
the communication unit transmits a connection rejection request for requesting for rejecting to be connected to the other device that does not have the reporting capability to the device.

26. The information processing device according to claim 17, wherein
the information regarding the security includes information regarding a traffic amount of data in a segment between the device and other device.

27. The information processing device according to claim 17, wherein
the communication unit transmits the designation information to the device configuring a local network and transmits information indicating a security management state in the local network to a device that performs security management of a network including the local network.

28. The information processing device according to claim 17, wherein
the control unit determines processing to be performed for security protection by the device on a basis of the information regarding the security for the segment between the device and the other device and generates the designation information on a basis of a determination result and a determination result by another information processing device different from the information processing device regarding the processing to be performed for security protection by the device.

29. The information processing device according to claim 17, wherein
the communication unit
transmits selection criteria information indicating a selection criteria of the designation information to the device, and
receives information indicating a single piece of the designation information selected from among the plurality of pieces of designation information received from the plurality of devices including the information processing device by the device from the device for the segment between the device and the other device.

30. An information processing method comprising steps of:
receiving information regarding security of a predetermined device;
generating designation information indicating processing to be performed for security protection by the device on a basis of the information regarding the security; and
transmitting the designation information.

31. A program for causing a computer to perform processing including steps of:
receiving information regarding security of a predetermined device;
generating designation information indicating processing to be performed for security protection by the device on a basis of the information regarding the security; and
transmitting the designation information.
